# EUROPEAN PATENT SPECIFICATION

(11) **EP 4 398 612 B1**
(45) Date of publication and mention of the grant of the patent: **29.07.2026**
(21) Application number: 22863462.2
(22) Date of filing: 30.08.2022
(51) Int. Cl.: H04W 4/50, H04W 72/04, H04W 76/12, G01S 13/88, H04W 4/38, H04W 24/08

(54) **PERCEPTION SERVICE PROCESSING METHOD AND DEVICE**
VERFAHREN UND VORRICHTUNG ZUR VERARBEITUNG EINES WAHRNEHMUNGSDIENSTES
PROCÉDÉ ET DISPOSITIF DE TRAITEMENT DE SERVICE DE PERCEPTION

(30) Priority: 02.09.2021 CN 202111028846
(43) Date of publication of application: 10.07.2024
(73) Proprietor: Vivo Mobile Communication Co., Ltd., Dongguan, Guangdong 523863 (CN)
(72) Inventor: CHONG, Weiwei, Dongguan, Guangdong 523863 (CN); LI, Huan, Dongguan, Guangdong 523863 (CN)
(74) Representative: Conti, Marco
(86) International application number: PCT/CN2022/115872
(87) International publication number: WO 2023/030327

(56) References cited:
- CN-A- 101 682 873
- CN-A- 103 369 501
- CN-A- 106 992 894
- CN-A- 109 785 192
- CN-A- 112 689 300
- CN-A- 112 738 758
- CN-A- 112 804 662
- CN-A- 112 804 662
- CN-A- 113 115 341
- CN-A- 113 329 374
- US-A1- 2009 213 858
- US-A1- 2014 036 728
- US-A1- 2015 257 032
- US-A1- 2019 364 399
- US-A1- 2022 304 081

## Description

### TECHNICAL FIELD

This application pertains to the field of communication technologies, and specifically relates to a method for processing a sensing service and a device, where the device may include an apparatus for processing a sensing service, a terminal, a network side device, and the like.

### BACKGROUND

Wireless communication and radar sensing (Communication & Sensing, C&S) have been developing in parallel with limited intersection. In recent years, these two systems have received increasing attention from researchers in terms of coexistence, cooperation and joint design.

If a wireless communication system can also provide a sensing function in addition to providing a function of data communication transmission, it is equivalent to fusing the wireless communication system and a radar sensing system into one system. This will greatly reduce hardware deployment costs. However, the current wireless communication system cannot provide the sensing function.

US2019/364399A1 provides a mechanism capable of processing a service using a plurality of sensor devices in a distributed manner while suppressing a communication load and pro-viding the service. A control device is arranged on a local network side with respect to a gateway between an internet and a local network. The control device includes: a control unit configured to transmit or receive information regarding one or more sensor devices wirelessly connected to a first cell associated with the control device to or from another control device associated with a second cell.

CN112804662A relates to the field of wireless communication technology, specifically to a method, device, terminal equipment, and storage medium for providing wireless sensing services. The method is applied to terminal equipment that lacks wireless sensing capability (NSCS). The steps include: sending a sensing service request frame to terminal equipment equipped with wireless sensing capabilities (SCS). The sensing service request frame includes a Sensing Service Identifier (Sensing SID). Receiving a sensing service response frame from the SCS. The sensing service response frame includes a Status Code and Sensing SID, where the Status Code indicates whether the SCS agrees or disagrees to provide the sensing service. And receiving sensing results obtained through the wireless sensing process conducted by the SCS.

US2014/036728A1 provides an apparatus for controlling a backbone network according to the present invention comprises: a context-interpreting unit, which interprets the request for a service of a sensor node, and generates a session containing routing information; a sensor node registration unit, which stores sensor node information and routing information, and which provides routing information; a gateway, which transmits the service request using routing information, and which receives a response message; and a message-processing unit, which transmits the service request, and which provides the response message.

### SUMMARY

Embodiments of this application provide a method for processing a sensing service and a device, which can resolve the problem that a wireless communication system cannot provide a sensing function.

According to a first aspect, a method for processing a sensing service is provided, including: receiving, by an SCF, a sensing service request message sent by a first device; sending, by the SCF, sensing service control information to a sensing device, where the sensing service control information is generated by the SCF according to the sensing service request message, and the sensing service control information is used to indicate the sensing device to obtain sensing measurement data; and receiving, by the SCF, the sensing measurement data sent by the sensing device.

According to a second aspect, a method for processing a sensing service is provided, including: receiving, by an access and mobility management function, sensing service control information from an SCF; and sending, by the access and mobility management function, the sensing service control information to a sensing device, where the sensing service control information is used to indicate the sensing device to obtain sensing measurement data.

Optionally, the sensing service control information is further used to indicate at least one of the following: the sensing device configures a sensing measurement resource; and the sensing device performs sensing measurement.

Optionally, before the receiving, by an access and mobility management function, sensing service control information from an SCF, the method further includes: receiving, by the access and mobility management function, a sensing service request message sent by a first device; and sending, by the access and mobility management function, the sensing service request message to the SCF, where the first device includes an AF or a consumer terminal device.

Optionally, the sensing service request message includes at least one of the following: description information of the sensing service, an identifier of the consumer terminal device, and target range information of the sensing service.

Optionally, the target range information of the sensing service includes range information corresponding to position information of the consumer terminal device.

Optionally, the description information of the sensing service includes at least one of the following: type information of the sensing service; information about a sensing object; sensing quantity information of the sensing object; purpose or usage information of the sensing service; granularity information of the sensing service; execution time information of the sensing service; related reporting information of the sensing measurement data; and QoS information of the sensing service.

Optionally, the sensing device includes at least one of the following: a sensing terminal device and a sensing access network device.

Optionally, the method further includes: sending, by the access and mobility management function, an identifier or address information of the sensing device to the SCF, where the identifier or the address information of the sensing device is used by the SCF to select the sensing device.

Optionally, the method further includes: receiving, by the access and mobility management function, the sensing measurement data sent by the sensing device; and sending, by the access and mobility management function, the sensing measurement data to the SCF.

Optionally, the sensing device includes a sensing terminal device, and the method further includes: requesting, by the access and mobility management function from a policy control function, the URSP corresponding to the sensing terminal device, where the URSP includes a corresponding data path selection policy according to which the sensing device sends the sensing measurement data to the SCF; receiving, by the access and mobility management function, the URSP sent by the policy control function; and sending, by the access and mobility management function, the received URSP to the sensing device.

According to a third aspect, a method for processing a sensing service is provided, including: receiving, by a sensing device, sensing service control information from an SCF, where the sensing service control information is used to indicate the sensing device to obtain sensing measurement data; obtaining, by the sensing device, the sensing measurement data according to the sensing service control information; and sending, by the sensing device, the sensing measurement data to the SCF.

According to a fourth aspect, a method for processing a sensing service is provided, including: obtaining, by a sensing terminal device, a UE route selection policy URSP sent by a policy control function, where the URSP includes a corresponding data path selection policy according to which the sensing terminal device sends the sensing measurement data to the SCF; and sending, by the sensing device, the sensing measurement data to the SCF according to the URSP.

Optionally, the URSP includes at least one of the following corresponding route selection description information: flow description information corresponding to the sensing service, sensing measurement data, time information, and position information.

Optionally, the obtaining, by a sensing terminal device, a UE route selection policy URSP sent by a policy control function includes: obtaining, by the sensing terminal device through an access and mobility management function, the UE route selection policy URSP sent by the policy control function.

According to a fifth aspect, a method for processing a sensing service is provided, including: determining, by a policy control function, a URSP corresponding to a sensing terminal device, where the URSP includes a corresponding data path selection policy according to which the sensing terminal device sends sensing measurement data to an SCF; and sending, by the policy control function, the URSP to the sensing terminal device.

Optionally, the URSP includes at least one of the following corresponding route selection description information: flow description information corresponding to the sensing service, sensing measurement data, time information, and position information.

Optionally, the method further includes: receiving, by the policy control function, a policy request message sent by an access and mobility management function or the SCF, where the policy request message is used to request the URSP corresponding to the sensing terminal device.

Optionally, the sending, by the policy control function, the URSP to the sensing terminal device includes: sending, by the policy control function, the URSP to the sensing terminal device through the access and mobility management function.

According to a sixth aspect, an apparatus for processing a sensing service is provided, including: a receiving module, configured to receive a sensing service request message sent by a first device; a sending module, configured to: send sensing service control information to a sensing device, where the sensing service control information is generated by the apparatus according to the sensing service request message, and the sensing service control information is used to indicate the sensing device to obtain sensing measurement data; and the receiving module is further configured to receive the sensing measurement data sent by the sensing device.

According to a seventh aspect, an apparatus for processing a sensing service is provided, including: a receiving module, configured to receive sensing service control information from an SCF; and a sending module, configured to send the sensing service control information to a sensing device, where the sensing service control information is used to indicate the sensing device to obtain sensing measurement data.

According to an eighth aspect, an apparatus for processing a sensing service is provided, including: a receiving module, configured to receive sensing service control information from an SCF, where the sensing service control information is used to indicate the apparatus to obtain sensing measurement data; a processing module, configured to obtain the sensing measurement data according to the sensing service control information; and a sending module, configured to send the sensing measurement data to the SCF.

According to a ninth aspect, an apparatus for processing a sensing service is provided, including: an obtaining module, configured to obtain a UE route selection policy URSP sent by a policy control function, where the URSP includes a corresponding data path selection policy according to which a sensing terminal device sends sensing measurement data to an SCF; and a sending module, configured to send the sensing measurement data to the SCF according to the URSP.

According to a tenth aspect, an apparatus for processing a sensing service is provided, including: a determining module, configured to determine a URSP corresponding to a sensing terminal device, where the URSP includes a corresponding data path selection policy according to which the sensing terminal device sends sensing measurement data to an SCF; and a sending module, configured to send the URSP to the sensing terminal device.

According to an eleventh aspect, a terminal is provided. The terminal includes a processor, a memory, and a program or an instruction that is stored in the memory and that can be run on the processor, where when the program or the instruction is executed by the processor, the method according to third aspect or the fourth aspect is implemented.

According to a twelfth aspect, a terminal is provided, including a processor and a communication interface. The communication interface is configured to receive sensing service control information from an SCF, where the sensing service control information is used to indicate the terminal to obtain sensing measurement data; the processor is configured to obtain the sensing measurement data according to the sensing service control information; the communication interface is further configured to send the sensing measurement data to the SCF; or the communication interface is configured to: obtain a URSP sent by a policy control function, where the URSP includes a corresponding data path selection policy according to which the sensing terminal device sends the sensing measurement data to the SCF; and send the sensing measurement data to the SCF according to the URSP.

According to a thirteenth aspect, a network side device is provided. The network side device includes a processor, a memory, and a program or an instruction that is stored in the memory and that can be run on the processor, where when the program or the instruction is executed by the processor, the method according to any one of the first aspect to the fifth aspect is implemented.

According to a fourteenth aspect, a network side device is provided, including a processor and a communication interface, where the processor and the communication interface are used to implement the method according to any one of the first aspect to the fifth aspect.

According to a fifteenth aspect, a readable storage medium is provided. The readable storage medium stores a program or an instruction, where when the program or the instruction is executed by a processor, the method according to any one of the first aspect to the fifth aspect is implemented.

According to a sixteenth aspect, a chip is provided. The chip includes a processor and a communication interface, the communication interface is coupled to the processor, and the processor is configured to run a program or an instruction to implement the method according to any one of the first aspect to the fifth aspect.

According to a seventeenth aspect, a computer program/program product is provided, where the computer program/program product is stored in a non-transient storage medium, and the program/program product is executed by at least one processor to implement the method according to any one of the first aspect to the fifth aspect.

In the embodiments of this application, the SCF receives the sensing service request message sent by the first device, and sends the sensing service control information to the sensing device, where the sensing service control information is generated by the SCF according to the sensing service request message, and is used to indicate the sensing device to obtain the sensing measurement data, and after the sensing device performs sensing measurement to generate the sensing measurement data, the SCF may further receive the sensing measurement data sent by the sensing device. In the embodiments of this application, in addition to providing a function of data communication transmission, the wireless communication system can also provide a sensing function, to help implement fusion of wireless communication and radar sensing, thereby greatly reducing hardware deployment costs.

### BRIEF DESCRIPTION OF DRAWINGS

FIG. 1 is a schematic diagram of a wireless communication system according to an embodiment of this application;
FIG. 2 is a schematic flowchart of a method for processing a sensing service according to an embodiment of this application;
FIG. 3 is a schematic flowchart of a method for processing a sensing service according to an embodiment of this application;
FIG. 4 is a schematic flowchart of a method for processing a sensing service according to an embodiment of this application;
FIG. 5 is a schematic flowchart of a method for processing a sensing service according to an embodiment of this application;
FIG. 6 is a schematic flowchart of a method for processing a sensing service according to an embodiment of this application;
FIG. 7 is a schematic diagram of a system architecture of a method for processing a sensing service according to an embodiment of this application;
FIG. 8 is a schematic flowchart of a method for processing a sensing service according to an embodiment of this application;
FIG. 9 is a schematic diagram of a system architecture of a method for processing a sensing service according to an embodiment of this application;
FIG. 10 is a schematic flowchart of a method for processing a sensing service according to an embodiment of this application;
FIG. 11 is a schematic structural diagram of an apparatus for processing a sensing service according to an embodiment of this application;
FIG. 12 is a schematic structural diagram of an apparatus for processing a sensing service according to an embodiment of this application;
FIG. 13 is a schematic structural diagram of an apparatus for processing a sensing service according to an embodiment of this application;
FIG. 14 is a schematic structural diagram of an apparatus for processing a sensing service according to an embodiment of this application;
FIG. 15 is a schematic structural diagram of an apparatus for processing a sensing service according to an embodiment of this application;
FIG. 16 is a schematic structural diagram of a communication device according to an embodiment of this application;
FIG. 17 is a schematic structural diagram of a terminal according to an embodiment of this application; and
FIG. 18 is a schematic structural diagram of a network side device according to an embodiment of this application.

### DESCRIPTION OF EMBODIMENTS

The following clearly describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that the technology described in the embodiments of this application is not limited to a long term evolution (Long Term Evolution, LTE)/LTE-Advanced (LTE-Advanced, LTE-A) system, and may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA) systems, and another system. The terms "system" and "network" in the embodiments of this application may be usually used interchangeably. The technologies described can be applied to both the systems and the radio technologies mentioned above as well as to other systems and radio technologies. A new radio (New Radio, NR) system is described below for an illustration purpose, and the term NR is used in most of the descriptions, although these technologies can also be used in an application other than an NR system application, for example, a 6^{th} generation (6^{th} Generation, 6G) communication system.

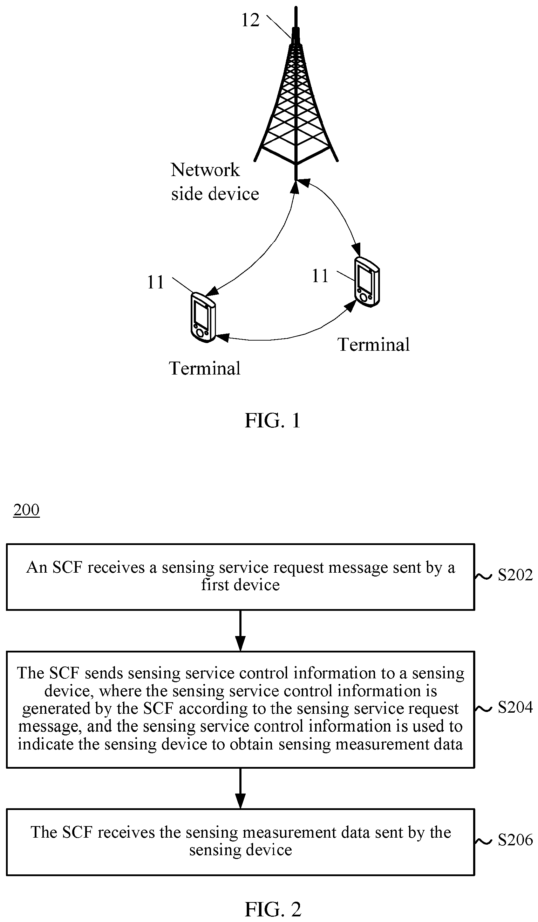

FIG. 1 is a schematic diagram of a wireless communication system to which an embodiment of this application can be applied. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) (or referred to as a notebook computer), a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (Augmented reality, AR)/virtual reality (virtual Reality, VR) device, a robot, a wearable device (Wearable Device), vehicle user equipment (VUE), pedestrian user equipment (PUE), or a smart home (a home device having a wireless communication function, such as a refrigerator, a television, a washing machine, or furniture). The wearable device includes: a smartwatch, a smart bracelet, a smart headphone, smart glasses, smart jewelry (a smart bangle, a smart bracelet, a smart ring, a smart necklace, a smart anklet, a smart ankle chain, and the like), a smart wristband, smart clothing, a game console, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a next-generation NodeB (gNB), a home NodeB, a home evolved NodeB, a wireless local area network (Wireless Local Area Network, WLAN) access point, a wireless fidelity (Wireless Fidelity, WiFi) node, a transmitting receiving point (Transmitting Receiving Point, TRP), or another appropriate term in the art. Provided that the same technical effect is achieved, the base station is not limited to a specific technical term. It should be noted that the base station in the NR system is taken only as an example in the embodiments of this application, but a specific type of the base station is not limited.

It should be noted that the steps in the embodiments of this application are merely illustrative descriptions and do not mean that all of the steps are mandatory, and that some steps may not be performed in some cases.

With reference to the accompanying drawings, a method for processing a sensing service and a device provided in the embodiments of this application are described below in detail by using some embodiments and application scenarios thereof.

As shown in FIG. 2, an embodiment of this application provides a method 200 for processing a sensing service. The method may be performed by a sensing control function (Sensing Control Function, SCF). The method includes the following steps.

S202: The SCF receives a sensing service request message sent by a first device.

In this embodiment, the SCF may be configured to control a sensing device to obtain sensing measurement data, and based on the sensing measurement data reported by the sensing device, the SCF may further perform some data processing (for example, data analysis) to obtain a sensing result. The SCF may have different names in different communication systems. For example, the SCF may also be referred to as a sensing function (Sensing Function, SF), or the like.

The first device may include an application function (Application Function, AF) or a consumer terminal device (for example, consumer UE), or the like. It may be understood that the AF and the consumer terminal device may also have different names in different communication systems.

Optionally, in this step, that the SCF receives the sensing service request message sent by the first device includes one of the following:
(1) The SCF directly receives the sensing service request message sent by the first device, where the first device includes an application function AF or a consumer terminal device.
(2) The SCF receives, through a network exposure function (Network Exposure Function, NEF), the sensing service request message sent by the first device, where the first device includes an application function AF or a consumer terminal device.

In this example, the consumer terminal device may send the sensing service request message to the AF, and the AF sends the sensing service request message to the SCF through the NEF; or, the consumer terminal device may send the sensing service request message to the AF, the AF sends the sensing service request message to an access and mobility management function through the NEF, and the access and mobility management function may send the sensing service request message to the SCF.

The access and mobility management function mentioned in the embodiments of this application may be used for access and mobility management of a terminal, and may have different names in different communication systems. For example, in a 5^{th} generation (5^{th} Generation, 5G) communication system, the access and mobility management function may be referred to as (Access and Mobility Management Function, AMF).

(3) The SCF receives, through an access and mobility management function, the sensing service request message sent by the first device, where the first device includes an application function AF or a consumer terminal device.

In this example, the consumer terminal device or the AF may send the sensing service request message to the access and mobility management function, and then the access and mobility management function may send the sensing service request message to the SCF.

The sensing service request message mentioned in the foregoing examples may include at least one of the following: description information of the sensing service, an identifier of the consumer terminal device, and target range information of the sensing service.

Optionally, the target range information of the sensing service includes range information corresponding to position information of the consumer terminal device. For example, the range information is within a circle with a radius of 100 meters centered on the position of the consumer terminal device. It may be understood that the range information may be relative position information with respect to the position of the consumer terminal device, or may be absolute position information, or the like. In other words, the target range information of the sensing service includes three cases: the position of the consumer terminal device + the relative position range; the position of the consumer terminal device + the absolute position range; and the absolute position range.

Optionally, the description information of the sensing service includes at least one of the following: type information of the sensing service; information about a sensing object; sensing quantity information of the sensing object; purpose or usage information of the sensing service; granularity information of the sensing service; execution time information of the sensing service; related reporting information of the sensing measurement data; and quality of service (Quality of Service, QoS) information of the sensing service. The description information of the sensing service is described in detail in subsequent embodiments.

S204: The SCF sends sensing service control information to the sensing device, where the sensing service control information is generated by the SCF according to the sensing service request message, and the sensing service control information is used to indicate the sensing device to obtain the sensing measurement data.

Optionally, the sensing service control information is further used to indicate the sensing device to configure a sensing measurement resource, where the measurement resource may include a sensing signal resource and the like.

Optionally, the sensing service control information is further used to indicate the sensing device to perform sensing measurement.

In this step, that the SCF sends the sensing service control information to the sensing device may include: The SCF sends, through an access and mobility management function, the sensing service control information to the sensing device, where the sensing device may include at least one of the following: a sensing terminal device, a sensing access network device, and the like.

In an example, before the SCF sends the sensing service control information to the sensing device, the method further includes at least one of the following: The SCF selects the sensing device according to the sensing service request message sent by the first device; and the SCF selects, according to an identifier or address information that is of the sensing device and that is obtained at the access and mobility management function, the sensing device.

S206: The SCF receives the sensing measurement data sent by the sensing device.

In this embodiment, after receiving the sensing service control information sent by the SCF, the sensing device may perform sensing measurement according to the sensing service control information, to obtain the sensing measurement data; or, the sensing device indicates, according to the sensing service control information, a second device to perform sensing measurement, to obtain the sensing measurement data sent by the second device.

Optionally, that the SCF receives the sensing measurement data sent by the sensing device includes at least one of the following: The SCF receives, through a control plane tunnel, the sensing measurement data sent by the sensing device; and the SCF receives, through a user plane tunnel, the sensing measurement data sent by the sensing device.

That the SCF receives, through the control plane tunnel, the sensing measurement data sent by the sensing device includes: The SCF receives, through an access and mobility management function, the sensing measurement data sent by the sensing device, where the control plane tunnel includes a control plane tunnel between the SCF and the access and mobility management function.

In a specific example, when the sensing device is a sensing terminal device, the control plane tunnel includes a non-access stratum (Non-Access Stratum, NAS) signaling tunnel of the sensing terminal device.

That the SCF receives, through the user plane tunnel, the sensing measurement data sent by the sensing device includes: The SCF receives, through a user plane function, the sensing measurement data sent by the sensing device, where the user plane tunnel includes a user plane tunnel between the SCF and the user plane function.

In a specific example, when the sensing device is a sensing terminal device, the user plane tunnel includes a packet data protocol data unit (Protocol Data Unit, PDU) session (session) tunnel of the sensing terminal device.

In a case that the SCF receives the sensing measurement data through the user plane tunnel, the sensing measurement data may be sent by the sensing terminal device according to a UE route selection policy (UE Route Selection Policy, URSP). In this case, the method 200 provided in this embodiment may further include the following steps: The SCF requests, from a policy control function, the URSP corresponding to the sensing terminal device, where the URSP includes a corresponding data path selection policy according to which the sensing device sends the sensing measurement data to the SCF; the SCF receives the URSP sent by the policy control function; and the SCF sends the received URSP to the sensing terminal device.

Optionally, based on the foregoing embodiments, the method further includes the following step: The SCF sends at least one of the following to the first device: the sensing measurement data; and a sensing service analysis result obtained by the SCF according to the sensing measurement data.

In the method for processing a sensing service provided in this embodiment of this application, the SCF receives the sensing service request message sent by the first device, and sends the sensing service control information to the sensing device, where the sensing service control information is generated by the SCF according to the sensing service request message, and is used to indicate the sensing device to obtain the sensing measurement data, and after the sensing device performs sensing measurement to generate the sensing measurement data, the SCF may further receive the sensing measurement data sent by the sensing device. In this embodiment of this application, in addition to providing a function of data communication transmission, the wireless communication system can also provide a sensing function, to help implement fusion of wireless communication and radar sensing, thereby greatly reducing hardware deployment costs.

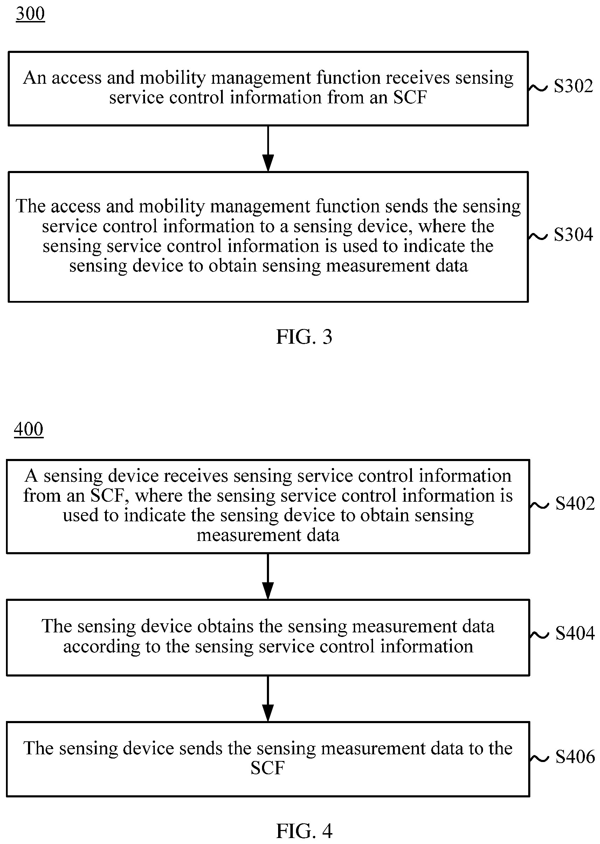

The method for processing a sensing service according to an embodiment of this application is described in detail above with reference to FIG. 2. A method for processing a sensing service according to another embodiment of this application is described below in detail with reference to FIG. 3. It may be understood that descriptions from the side of the access and mobility management function are the same as or correspond to the descriptions from the SCF side in the method shown in FIG. 2. To avoid repetition, related descriptions are appropriately omitted.

FIG. 3 is a schematic flowchart of implementing a method for processing a sensing service according to an embodiment of this application. The method may be applied to an access and mobility management function. As shown in FIG. 3, the method 300 includes the following steps.

S302: The access and mobility management function receives sensing service control information from an SCF.

S304: The access and mobility management function sends the sensing service control information to a sensing device, where the sensing service control information is used to indicate the sensing device to obtain sensing measurement data.

In this embodiment of this application, the access and mobility management function receives the sensing service control information from the SCF, and sends the sensing service control information to the sensing device, where the sensing service control information is used to indicate the sensing device to obtain the sensing measurement data, and the sensing service control information is used to indicate the sensing device to obtain the sensing measurement data. In this way, the sensing device can perform sensing measurement to generate the sensing measurement data and send the sensing measurement data to the SCF. In this embodiment of this application, in addition to providing a function of data communication transmission, the wireless communication system can also provide a sensing function, to help implement fusion of wireless communication and radar sensing, thereby greatly reducing hardware deployment costs.

Optionally, in an embodiment, the sensing service control information is further used to indicate at least one of the following: the sensing device configures a sensing measurement resource; and the sensing device performs sensing measurement.

Optionally, in an embodiment, before the access and mobility management function receives the sensing service control information from the SCF, the method further includes: The access and mobility management function receives a sensing service request message sent by a first device; and the access and mobility management function sends the sensing service request message to the SCF, where the first device includes an AF or a consumer terminal device.

Optionally, in an embodiment, the sensing service request message includes at least one of the following: description information of the sensing service, an identifier of the consumer terminal device, and target range information of the sensing service.

Optionally, in an embodiment, the target range information of the sensing service includes range information corresponding to position information of the consumer terminal device. It may be understood that, the range information may be relative position information with respect to the position of the consumer terminal device, or may be absolute position information, or the like. In other words, the target range information of the sensing service includes three cases: the position of the consumer terminal device + the relative position range; the position of the consumer terminal device + the absolute position range; and the absolute position range.

Optionally, in an embodiment, the description information of the sensing service includes at least one of the following: type information of the sensing service; information about a sensing object; sensing quantity information of the sensing object; purpose or usage information of the sensing service; granularity information of the sensing service; execution time information of the sensing service; related reporting information of the sensing measurement data; and QoS information of the sensing service.

Optionally, in an embodiment, the sensing device includes at least one of the following: a sensing terminal device and a sensing access network device.

Optionally, in an embodiment, the method further includes: The access and mobility management function sends an identifier or address information of the sensing device to the SCF, where the identifier or the address information of the sensing device is used by the SCF to select the sensing device.

Optionally, in an embodiment, the method further includes: The access and mobility management function receives the sensing measurement data sent by the sensing device; and the access and mobility management function sends the sensing measurement data to the SCF.

Optionally, in an embodiment, the sensing device includes a sensing terminal device, and the method further includes: The access and mobility management function requests, from a policy control function, a URSP corresponding to the sensing terminal device, where the URSP includes a corresponding data path selection policy according to which the sensing device sends the sensing measurement data to the SCF; the access and mobility management function receives the URSP sent by the policy control function; and the access and mobility management function sends the received URSP to the sensing device.

FIG. 4 is a schematic flowchart of implementing a method for processing a sensing service according to an embodiment of this application. The method may be applied to a side of a sensing device. As shown in FIG. 4, the method 400 includes the following steps.

S402: The sensing device receives sensing service control information from an SCF, where the sensing service control information is used to indicate the sensing device to obtain sensing measurement data.

S404: The sensing device obtains the sensing measurement data according to the sensing service control information.

S406: The sensing device sends the sensing measurement data to the SCF.

In this embodiment of this application, the sensing device receives the sensing service control information from the SCF, obtains the sensing measurement data according to the sensing service control information, and sends the generated sensing measurement data. In this embodiment of this application, in addition to providing a function of data communication transmission, the wireless communication system can also provide a sensing function, to help implement fusion of wireless communication and radar sensing, thereby greatly reducing hardware deployment costs.

Optionally, in an embodiment, that the sensing device obtains the sensing measurement data according to the sensing service control information includes: The sensing device performs sensing measurement according to the sensing service control information, to obtain the sensing measurement data; or, the sensing device indicates, according to the sensing service control information, a second device to perform sensing measurement, to obtain the sensing measurement data sent by the second device.

Optionally, in an embodiment, that the sensing device indicates, according to the sensing service control information, the second device to perform sensing measurement includes: The sensing device configures a sensing measurement resource according to the sensing service control information; and the sensing device sends information about the sensing measurement resource to the second device, where the information about the sensing measurement resource is used to indicate the second device to perform sensing measurement.

Optionally, in an embodiment, that the sensing device sends the sensing measurement data to the SCF includes at least one of the following: The sensing device sends the sensing measurement data to the SCF through a control plane tunnel; and the sensing device sends the sensing measurement data to the SCF through a user plane tunnel.

Optionally, in an embodiment, the sensing service control information includes at least one of the following: description information of the sensing service, an identifier of the consumer terminal device, and target range information of the sensing service.

Optionally, in an embodiment, the description information of the sensing service includes at least one of the following: type information of the sensing service; information about a sensing object; sensing quantity information of the sensing object; purpose or usage information of the sensing service; granularity information of the sensing service; execution time information of the sensing service; related reporting information of the sensing measurement data; and QoS information of the sensing service.

Optionally, in an embodiment, the sensing device includes at least one of the following: a sensing terminal device and a sensing access network device.

Optionally, in an embodiment, the sensing device includes a sensing terminal device, and that the sensing device sends the sensing measurement data to the SCF includes: The sensing terminal device sends the sensing measurement data to the SCF through a NAS signaling tunnel or a packet data PDU session tunnel.

Optionally, in an embodiment, the sensing terminal device sends the sensing measurement data to the SCF through the packet data PDU session tunnel, and the method further includes: The sensing terminal device receives a URSP corresponding to the sensing terminal device sent by a policy control function, where the URSP includes a corresponding data path selection policy according to which the sensing terminal device sends the sensing measurement data to the SCF; and the sensing terminal device establishes or modifies the PDU session tunnel according to the URSP.

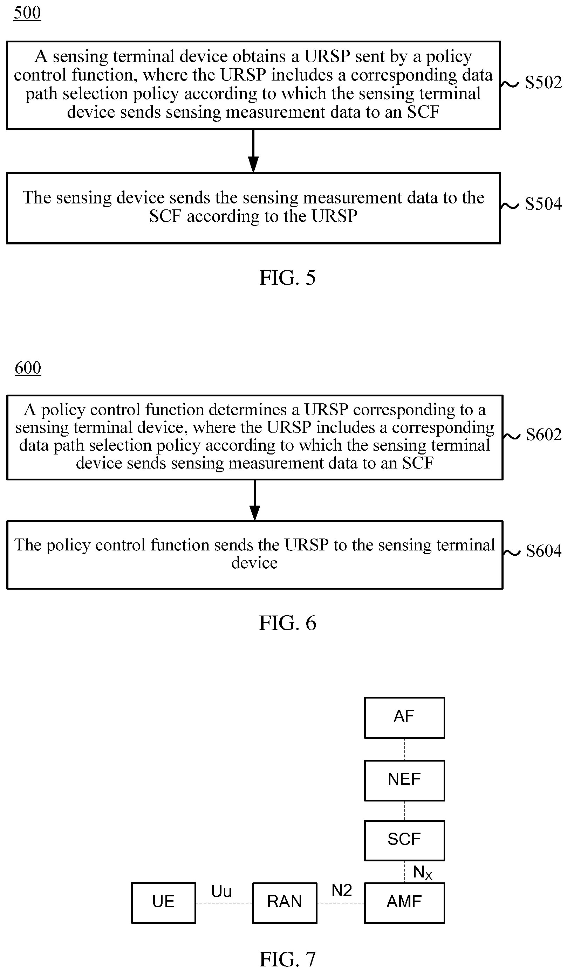

FIG. 5 is a schematic flowchart of implementing a method for processing a sensing service according to an embodiment of this application. The method may be applied to a side of a sensing device. As shown in FIG. 5, the method 500 includes the following steps.

S502: The sensing terminal device obtains a URSP sent by a policy control function, where the URSP includes a corresponding data path selection policy according to which the sensing terminal device sends sensing measurement data to an SCF.

S504: The sensing device sends the sensing measurement data to the SCF according to the URSP.

In this embodiment of this application, the sensing terminal device obtains the URSP sent by the policy control function, where the URSP includes the corresponding data path selection policy according to which the sensing terminal device sends the sensing measurement data to the SCF; and the sensing device sends the sensing measurement data to the SCF according to the URSP. In this embodiment of this application, in addition to providing a function of data communication transmission, the wireless communication system can also provide a sensing function, to help implement fusion of wireless communication and radar sensing, thereby greatly reducing hardware deployment costs.

Optionally, in an embodiment, the URSP includes at least one of the following corresponding route selection description information: flow description information corresponding to the sensing service, sensing measurement data, time information, and position information.

The route selection description information includes at least one of the following information: data network name (Data Network Name, DNN) selection information, slice (for example, single network slice selection assistance information (Single Network Slice Selection Assistance Information, S-NSSAI)) selection information, PDU session type selection information, access type (for example, a 3rd generation partnership project (3rd Generation Partnership Project, 3GPP) access type, a non-3GPP access type) selection information, and the like.

Optionally, in an embodiment, the method in which the sensing terminal device obtains the UE route selection policy URSP sent by the policy control function includes: The sensing terminal device obtains, through an access and mobility management function, the UE route selection policy URSP sent by the policy control function; or the sensing terminal device obtains, through the SCF, the URSP sent by the policy control function.

FIG. 6 is a schematic flowchart of implementing a method for processing a sensing service according to an embodiment of this application. The method may be applied to a side of a policy control function. As shown in FIG. 6, the method 600 includes the following steps.

S602: The policy control function determines a URSP corresponding to a sensing terminal device, where the URSP includes a corresponding data path selection policy according to which the sensing terminal device sends sensing measurement data to an SCF.

S604: The policy control function sends the URSP to the sensing terminal device.

In this embodiment of this application, the policy control function determines the URSP corresponding to the sensing terminal device, where the URSP includes the corresponding data path selection policy according to which the sensing terminal device sends the sensing measurement data to the SCF; and the policy control function sends the URSP to the sensing terminal device. In this embodiment of this application, in addition to providing a function of data communication transmission, the wireless communication system can also provide a sensing function, to help implement fusion of wireless communication and radar sensing, thereby greatly reducing hardware deployment costs.

Optionally, in an embodiment, the URSP includes at least one of the following corresponding route selection description information: flow description information corresponding to the sensing service, sensing measurement data, time information, and position information.

Optionally, in an embodiment, the method further includes: The policy control function receives a policy request message sent by an access and mobility management function or the SCF, where the policy request message is used to request the URSP corresponding to the sensing terminal device.

Optionally, in an embodiment, that the policy control function sends the URSP to the sensing terminal device includes: The policy control function sends the URSP to the sensing terminal device through the access and mobility management function; or the policy control function sends the URSP to the sensing terminal device through the SCF.

To describe in detail the method for processing a sensing service provided in the embodiments of this application, the following provides descriptions with reference to two specific embodiments.

### Embodiment 1

An architecture to which this embodiment is applicable is shown in FIG. 7. An independent sensing service function network element (for example, an SCF) may be deployed in a network, and a point-to-point interface (for example, an Nx interface) or a service based interface is disposed between the SCF and an AMF. The Nx interface or the service based interface carries transmission of sensing task related control signaling (for example, sensing service control information) and/or sensing measurement data. It may be understood that the Nx interface may alternatively be another name.

In this embodiment, a new protocol stack, namely, an NR sensing protocol (NR sensing protocol, NRSP), may be added between the SCF and a sensing terminal device (UE) based on an existing protocol stack. It may be understood that, the NR sensing protocol is a protocol according to which the SCF controls a sensing device to perform sensing measurement configuration and sensing measurement data reporting, and the NR sensing protocol may alternatively be another name.

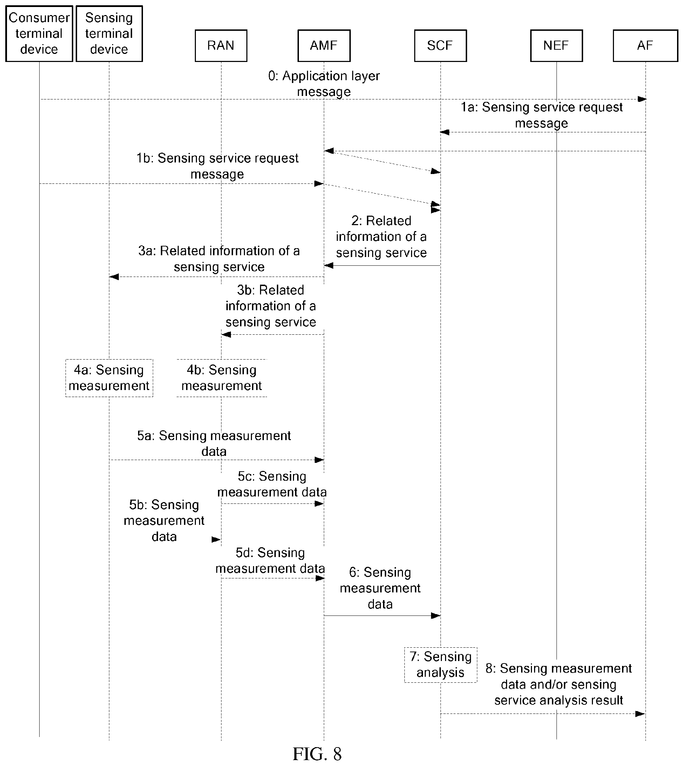

As shown in FIG. 8, this embodiment may include the following steps:
Step 0: Optionally, the consumer terminal device (consumer UE) exchanges sensing task information with an AF at an application layer, where the sensing task information may include a consumer UE identifier (Identifier, ID) and description information of a sensing service.

The description information of the sensing service includes at least one of the following information:
(1) Type information of the sensing service, where the type information is used to define a type of sensing service and may be defined according to a sensing physical range and a real-time requirement. For example, Type I represents a large sensing range and a high real-time requirement (Delay Critical LSS); Type II represents a large sensing range and a low real-time requirement (LSS); Type III represents a small sensing range and a low real-time requirement (Delay Critical SSS); and Type IV represents a small sensing range and a low real-time requirement (SSS).
(2) Information about a sensing object, where the sensing object includes but is not limited to at least one of: an article, a device, a person, an animal, a building, an automobile, an environment, air quality, a humidity, a temperature, and a specific area (namely, a particular area).
(3) Sensing quantity information of the sensing object, where the sensing quantity information includes but is not limited to at least one of: a position of the sensing object, a distance of the sensing object, a moving speed of the sensing object, imaging of the sensing object, a motion trajectory of the sensing object, texture analysis of the sensing object, and material analysis of the sensing object.
(4) Purpose or usage information of the sensing service, respectively corresponding to the second and third columns of Table 1 below.

**Table 1 Purpose and application use of the sensing service**

| Wireless sensing category | Purpose of the sensing service | Application use |
|---|---|---|
| Large-scale macro-sensing category | Weather, air quality, and the like | Meteorology, agriculture, and life services |
| | Stream of traffic (intersections) and stream of people (subway entrances) | Smart city, intelligent transportation, and business services |
| | Animal activities, migration, and the like | Animal husbandry, ecological environment protection, and the like |
| | Target tracking, ranging, velocity measurement, contours, and the like | Many application scenarios for conventional radars |
| | Three-dimensional map construction | Intelligent driving, navigation, and smart city |
| Short-distance refined-sensing category | Action posture recognition | Intelligent interaction of smartphones, games, and smart home |
| | Heartbeat/breathing, and the like Imaging, material detection, and the like | Health and medical care Security check, industry, and the like. |

(5) Granularity (per UE or per area) information of the sensing service, for example, indicating whether the sensing service is for a single user or a group of users, or indicating that the sensing service is for a target area.
(6) Execution time information of the sensing service, where time information of execution of the sensing service may be determined as absolute time information (for example, 13:00 to 19:00, Monday) or relative time information (for example, within the next month). The execution time information may include a start time, an end time, duration, or the like.
(7) Related reporting information (reporting information) of sensing measurement data, where the reporting information is used to define a condition for reporting the sensing measurement data, a reporting time, a reporting format, a quantity of times of reporting, and the like.

The reporting condition may be event triggered or cyclically triggered. In the case of the former, the reporting condition further includes event description information (for example, determining that a user has entered a driving state); or in the case of the latter, the reporting condition further includes reporting cycle information (for example, every five minutes). The reporting time is used to indicate a time range within which the sensing measurement data needs to be reported, and the reporting time may or may not be consistent with the foregoing sensing service time.

In addition, the reporting format is used to indicate a form in which the sensing measurement data is to be reported, for example, indicate that the sensing measurement data is to be reported in a binary/text form, or the like. The quantity of times of reporting is used to indicate whether reporting is performed once or for a plurality of times, and a quantity of times of reporting if reporting is performed for a plurality of times.

### (8) Quality of service (QoS) information of the sensing service (or referred to as a sensing indicator).

The QoS of the sensing service includes but is not limited to at least one of: sensing accuracy, a sensing error, a sensing range, a sensing delay, a detection probability, and a false alarm probability, where the sensing accuracy includes: a distance resolution, an imaging resolution, a moving speed resolution, or an angular resolution; and the sensing error includes: a distance error, an imaging error, or a moving speed error.

Optionally, the consumer UE may further target range information of the sensing service to the AF, to indicate execution of the sensing service for the sensing service object within the range. The range may be a relative position range (for example, within 20 meters) or an absolute position range (tracking area identity (Tracking Area Identity, TAI) (s), cell ID(s), and area description information (for example, Tiananmen Square, Beijing)). For example, when the granularity of the sensing service is TAI(s), it indicates that the sensing service is performed within a range indicated by the TAI(s); or when the granularity of the sensing service is an area ID, it indicates that the sensing service is performed within a range indicated by the area ID. When a plurality of pieces of information are present, ranges indicated by the plurality of pieces of information may be consistent or inconsistent. If the ranges indicated by the plurality of pieces of information are inconsistent, it indicates that the sensing service is performed within a union set range of the ranges indicated by the plurality of pieces of information.

In this step, the AF can know that the consumer UE requests to execute the sensing service corresponding to the description information of the sensing service.

Step 1a: The service server AF sends a sensing service request message to the network (the AMF or the SCF) through a NEF, where the sensing service request message may carry description information of the sensing service.

The description information of the sensing service in step 1a may be the same as or different from that in step 0. In a case that the description information of the sensing service in step 1a is different from that in step 0, the AF actually extracts or generates the description information of the corresponding sensing service in step la based on the description information of the sensing service in step 0.

Optionally, the sensing service request message further includes identifier information of the service object of the sensing service, for example, the consumer UE ID, for indicating a user device identifier that triggers the sensing service, or, indicating a user identifier corresponding to the service object of the sensing service.

Optionally, the target range information of the sensing service is used to indicate execution of the sensing service for the sensing service object within the range. The range may be a relative position range (for example, within 20 meters) or an absolute position range (for example, Tiananmen Square, Beijing).

Optionally, if the AF has determined which sensing device(s) (including a sensing terminal device or an access network device) is/are to be used for a particular service object (consumer UE) or a particular target range, the sensing service request message may also include sensing device identifier information (including sensing terminal device ID(s) or access network device ID(s)).

In an implementation, the AF may send the sensing service request message to the AMF through the NEF, and then the AMF forwards the sensing service request message to the SCF. This implementation may occur in but not limited to a scenario in which a plurality of SCFs are deployed in the network and the AMF needs to select a suitable SCF from the plurality of SCFs based on information such as the position of the consumer UE and the type of the sensing service.

In another implementation, the AF may directly send the sensing service request message to the SCF through the NEF. This implementation may occur in but not limited to a scenario in which one SCF or a relatively small quantity of SCFs are deployed in the network.

It should be noted that, if the AF is an AF trusted by an operator, step 1a may be performed without the NEF.

Step 1b: Optionally, the consumer UE may alternatively directly send the sensing service request message to the network (the AMF or the SCF).

Content of the sensing service request message is similar to that in step 1a.

In an implementation, the consumer UE may send the sensing service request message to the AMF by using a NAS message, and then the AMF forwards the sensing service request message to the SCF. This implementation may occur in but not limited to a scenario in which a plurality of SCFs are deployed in the network and the AMF needs to select a suitable SCF from the plurality of SCFs based on information such as the position of the consumer UE and the type of the sensing service.

In another implementation, the consumer UE may directly send the sensing service request message to the SCF. This implementation may occur in but not limited to a scenario in which one SCF or a relatively small quantity of SCFs are deployed in the network.

After the message is received in step 1a or 1b, the following two steps may be further included:
The network (an execution body may be the AMF or the SCF) selects a corresponding sensing device (including the sensing terminal device/access network device) for the sensing service of the target service object (the consumer UE).

The network (an execution body may be the AMF or the SCF) selects a corresponding sensing device (including the sensing terminal device/access network device) for the sensing service within the target range (target AOI).

In the foregoing two cases, if the AMF selects the corresponding sensing devices, the AMF may further send identifiers or address information corresponding to the sensing devices to the SCF before the following steps are performed.

Step 2: The SCF sends related information of the sensing service (corresponding to the sensing service control information in the foregoing embodiments) to the AMF, where the related information of the sensing service may include a sensing service correlation ID (sensing service correlation ID), a sensing device identifier, the description information of the sensing service (sensing service description) (optional), and configuration information of the sensing service (sensing service).

Specifically, the SCF may invoke a Namf_Communication_N1N2MessageTransfer message to send the related information of the sensing service.

The sensing service correlation ID may be used to identify a sensing service session.

The sensing device identifier is used to notify the AMF of a device participating in sensing signal measurement. The sensing device may include the sensing terminal device and/or the sensing access network device. The sensing device information is usually sent in a case that the SCF selects the corresponding sensing device.

For the description information of the sensing service, refer to the foregoing descriptions for details.

The configuration information of the sensing service is policy and control information formulated by the SCF for the description information of the sensing service. For example, the configuration information of the sensing service includes a sensing measurement data specifically used, a sensing resource, a configured QoS profile of the sensing service (a bandwidth configuration, a priority configuration, an accuracy configuration, and the like), a configured triggering condition for the sensing service, reporting information (reporting information), and the like.

The sensing measurement data mentioned above includes: a first type of measurement data K11 and a second type of measurement data K12.

Specifically, the first type of measurement data K11 includes at least one of the following: K111, a channel matrix H; K112, a received signal strength indication (Received Signal Strength Indication, RSSI); K113, a reference signal received power (Reference Signal Received Power, RSRP); K114, channel state information (Channel State Information, CSI); K115, power of each path in a multipath channel; K116, delay of each path in the multipath channel; K117, angle information of each path in the multipath channel; K118, Doppler spread; K119, Doppler frequency shift; K120, a phase difference between a sensing signal received by a first antenna and a sensing signal received by a second antenna; K121, a delay difference between the sensing signal received by the first antenna and the sensing signal received by the second antenna; and K122, a characteristic difference between an I-channel signal and a Q-channel signal.

It shouted be noted that the characteristic difference may be a phase difference or another difference between the I-channel signal and the Q-channel signal.

It should be noted herein that the I-channel signal and the Q-channel signal are respectively an in-phase signal and a quadrature signal, where I is in-phase, Q is quadrature, and the phase difference between the I-channel signal and the Q-channel signal is 90 degrees.

Specifically, the second type of measurement data K12 includes at least one of the following: K121, characteristic information of a target article, where it should be noted that the characteristic information of the target article is information that can reflect an attribute or a state of the target article, and may be at least one of the following: presence of the target article, a distance of the target article, a position of the target article, a speed of the target article, an acceleration of the target article, a material of the target article, a shape of the target article, a category of the target article, a radar cross section (Radar Cross Section, RCS) of the target article, a polarization scattering characteristic, and the like; K122, related information of a target event, where it should be noted that the related information of the target event is information related to the target event, namely, information that can be detected/sensed when the target event occurs, and may be at least one of the following: fall detection, intrusion detection, quantity statistics, indoor positioning, gesture recognition, lip language recognition, gait recognition, facial expression recognition, respiration monitoring, heart rate monitoring, and the like; and K123, related information of a target environment, where it should be noted that the related information of the target environment may be at least one of the following: humidity, brightness, temperature and humidity, atmospheric pressure, air quality, weather conditions, topography, distribution of buildings/vegetation, people counting, crowd density, vehicle density, and the like.

Optionally, the measurement data may further include at least one of the following: k21, a position, a material, a shape, and/or a category of a reflection point; and k22, radar spectrum information.

Optionally, the measurement data is a measurement data for each antenna or a measurement data for each sensing resource (a time domain or a frequency domain, where the frequency domain includes one or more subcarriers, a radio bearer (Radio Bearer, RB), a bandwidth part (Bandwidth Part, BWP), a carrier, and the like).

Step 3: The AMF sends the related information of the sensing service (corresponding to the sensing service control information in the foregoing embodiments) to the sensing device.

Step 3a: If the sensing device includes the sensing terminal device, the AMF sends the related information of the sensing service to the sensing terminal device by using a downlink NAS message, where the related information of the sensing service includes the sensing service correlation ID (Sensing service correlation ID), the sensing device identifier, the description information of the sensing service (sensing service description) (optional), and the configuration information of the sensing service (sensing service). Specifically, the related information of the sensing service is encapsulated in the NAS message and is transparently transmitted to the UE, and may be unparsable for the AMF.

This manner has two possible implementations. In one implementation, the sensing terminal device, as a measurement executor of the sensing service, performs, according to the related information of the sensing service sent by the AMF, sensing measurement on a sensing signal received by the sensing terminal device, to obtain the sensing measurement data. In the other implementation, the sensing terminal device configures a corresponding sensing resource (for example, a sensing signal) according to the related information of the sensing service sent by the AMF, and sends the sensing signal to a network element used for sensing measurement (including the UE itself, another sensing terminal device, or the sensing access network device), so that the another network element can obtain the sensing measurement data.

Step 3b: If the sensing device includes the sensing access network device, the AMF may further send the related information of the sensing service to the sensing access network device by using an N2 interface message, where the related information of the sensing service includes the sensing service correlation ID (Sensing service correlation ID), the sensing device identifier, the description information of the sensing service (sensing service description) (optional), and the configuration information of the sensing service (sensing service).

In one implementation, the sensing access network device sends a corresponding downlink sensing signal to the sensing terminal device according to the received related information of the sensing service, so that the sensing terminal device can perform corresponding measurement on the downlink sensing signal, to obtain the corresponding sensing measurement data.

This implementation is generally applicable to a scenario in which the sensing access network device controls, by using existing radio resource management (Radio resource management, RRM) configuration information, the sensing terminal device to measure some existing measurement data (for example, CSI, a synchronization signal and PBCH block (Synchronization Signal and PBCH block, SSB), and the like). If the UE senses the downlink sensing signal, the sensing access network device may further notify the UE of configuration information of the downlink sensing signal, to help the UE receive the downlink sensing signal according to the configuration information.

In another implementation, the sensing access network device, as a measurement executor of the sensing service, performs, according to the related information of the sensing service sent by the AMF, sensing measurement on a sensing signal received by the sensing access network device, to obtain the sensing measurement data. The sensing signal received by the sensing access network device includes: a sensing signal sent and received by the sensing access network device by itself, an uplink sensing signal sent by the UE, or a sensing signal sent by another access network device. If the sensing access network device receives the uplink sensing signal sent by the UE, the sensing access network device may notify the UE of configuration information of the uplink sensing signal in advance, to help the UE send the uplink sensing signal according to the configuration information.

The foregoing configuration information of the sensing signal may specifically include at least one of the following:
(1) a waveform, for example, orthogonal frequency division multiplex (Orthogonal frequency division multiplex, OFDM), single-carrier frequency division multiple access (Single-Carrier Frequency Division Multiple Access, SC-FDMA), orthogonal time frequency space (Orthogonal Time Frequency Space, OTFS), a frequency modulated continuous wave (Frequency Modulated Continuous Wave, FMCW), a pulse signal, or the like;
(2) a subcarrier spacing: for example, a subcarrier spacing of 30 KHz of an OFDM system;
(3) a guard interval: a time interval between a moment at which sending of a signal ends and a moment at which a latest echo signal of the signal is received; this parameter is proportional to a maximum sensing distance; for example, the guard interval can be calculated through 2dmax/c, where "/" herein represents a division operation, and dmax represents the maximum sensing distance (which belongs to sensing requirements); for example, for a sensing signal sent and received by the sensing device by itself, dmax represents a maximum distance between a receiving point of the sensing signal and a signal transmission point; and in some cases, a cyclic prefix CP of an OFDM signal can serve as a minimum guard interval;
(4) a bandwidth: this parameter is inversely proportional to a distance resolution, and can be obtained through c/(2*delta_d), where "/" herein represents a division operation, "*" represents a multiplication operation, delta_d represents the distance resolution (which belongs to sensing requirements), and c represents a speed of light;
(5) burst duration: this parameter is inversely proportional to a rate resolution (which belongs to sensing requirements), and this parameter is a time span of the sensing signal, mainly for the purpose of calculating a Doppler shift; this parameter can be obtained by dividing c by a first parameter value, which is a product of 2delta_v and fc, where delta_v represents the rate resolution; and fc represents a carrier frequency of the sensing signal;
(6) a time domain interval: this parameter can be obtained by dividing c by a second parameter value, which is a product of 2fc and v_range, where v_range is a maximum rate minus a minimum rate (which belongs to sensing requirements); and this parameter is a time interval between two adjacent sensing signals;
(7) transmit signal power, for example, a value taken every 2 dBm from -20 dBm to 23 dBm;
(8) a signal format, for example, a sounding reference signal (Sounding Reference Signal, SRS), a demodulation reference signal (Demodulation Reference Signal, DMRS), a positioning reference signal (Positioning Reference Signal, PRS), or the like, or another predefined signal, a related sequence format, and other information;
(9) a signal direction, for example, direction or beam information of the sensing signal;
(10) a time resource, for example, an index of a slot in which the sensing signal is located or a symbol index of the slot, where the time resource is divided into two types, one is a one-time time resource, for example, a symbol sends an omnidirectional first signal, and the other is non-one-time time resources, for example, a plurality of groups of periodic time resources or discontinuous time resources (which may include a start time and an end time), each group of periodic time resources send sensing signals in a same direction, and beam directions on different groups of periodic time resources are different;
(11) a frequency resource, including a center frequency, a bandwidth, an RB or a subcarrier, Point A, a start bandwidth position, or the like of the sensing signal; and
(12) a quasi co-location (Quasi co-location, QCL) relationship, for example, the sensing signal includes a plurality of resources, each resource corresponds to one SSB QCL, and the QCL includes Type A, B, C or D.

Similarly, in a case that the sensing access network device sends and receives the sensing signal by itself, the sensing access network device may also configure the sensing signal by itself in advance, so that the sensing access network device sends the sensing signal according to configuration information. For the configuration information of the sensing signal sent and received by the sensing access network device by itself, refer to the configuration information of the uplink sensing signal of the UE in the foregoing text.

Similarly, in a case that the sensing access network device receives a sensing signal sent by another access network device, the sensing access network device may also configure the sensing signal for the another access network device in advance (or the SCF sends the sensing service control information to the another access network device through the AMF, to configure the sensing signal), so that the another access network device sends the sensing signal according to the configuration information. For the configuration information of the sensing signal, refer to the configuration information of the uplink sensing signal of the UE in the foregoing text. Step 4a: The sensing terminal device performs sensing measurement according to the related information of the sensing service, to obtain the sensing measurement data.

Step 4b: The sensing access network device performs sensing measurement according to the related information of the sensing service, to obtain the sensing measurement data.

In another example, step 4b may be modified as: The access network device indicates the sensing terminal device to perform sensing measurement.

Specifically, the sensing terminal device sends and receives the sensing signal by itself or receives a downlink sensing signal sent by a radio access network (Radio Access Network, RAN), and performs measurement on the sensing signal, to obtain the corresponding sensing measurement data.

Step 5: The sensing device sends the sensing measurement data to the AMF.

When the sensing device is the sensing terminal device, this step has two possible implementations:

Step 5a: The sensing terminal device sends the obtained sensing measurement data to the AMF by using an uplink NAS message.

Steps 5b and 5c: The sensing terminal device sends the obtained sensing measurement data to the access network device by using a radio resource control (Radio Resource Control, RRC) message, and the access network device sends the sensing measurement data to the AMF.

When the sensing device is the sensing access network device, this step has one possible implementation:
Step 5d: The sensing access network device sends the sensing measurement data obtained by the sensing access network device to the AMF by using the N2 interface message.
Step 6: The AMF forwards, to the SCF, the sensing measurement data reported by the sensing device.

Specifically, the AMF may forward the sensing measurement data to the SCF by using a Namf_Communication_N1InforNotify message.

Step 7: Optionally, the SCF obtains a sensing service analysis result according to the sensing measurement data.

Specifically, the SCF may perform corresponding computational analysis based on an internally configured algorithm corresponding to the type of the sensing service, to obtain the sensing service analysis result. For example, the result of the sensing service may be information about a breathing health status of the user (whether breathing is abnormal, a degree of abnormality, or the like), or information about traffic hazards in the neighborhood (whether there is a sudden appearance of a pedestrian, a probability of appearance, and time), or the like.

Certainly, the algorithm may be an intelligent algorithm based on artificial intelligence (Artificial Intelligence, AI), and the algorithm may come from an external intelligent entity or from its own AI model training.

Step 8: The SCF sends the sensing measurement data and/or the sensing service analysis result to the AF.

Subsequently, the AF may further send the sensing measurement data and/or the sensing service analysis result to a consumer terminal device. Alternatively, step 8 may be replaced with the following: The SCF sends the sensing measurement data and/or the sensing service analysis result to a consumer terminal device.

### Embodiment 2

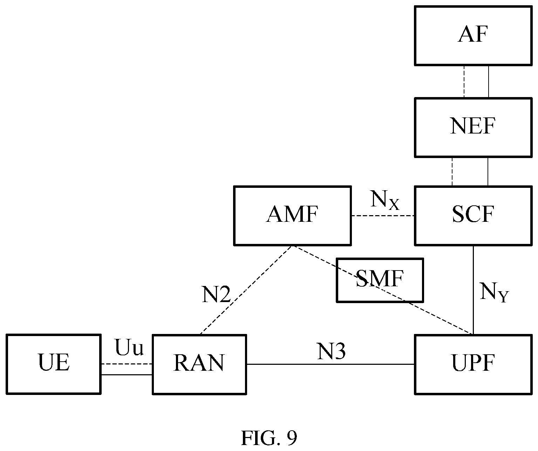

An architecture to which this embodiment is applicable is shown in FIG. 9. An independent sensing service function network element (for example, an SCF) is deployed in a network, a point-to-point interface (for example, an Nx interface) or a service based interface is disposed between the SCF and an AMF, and a point-to-point interface (for example, an Ny interface) or a service based interface is disposed between the SCF and a user plane function (User Plane Function, UPF). The Nx interface or the corresponding service based interface carries transmission of sensing task related control signaling. The Nx interface or the corresponding service based interface carries transmission of sensing measurement data. It may be understood that the Nx or Ny interface may each has another name. In addition, the AMF interacts with the UPF by using a session management function (Session Management Function, SMF).

In this embodiment, a new control plane protocol stack may be added between the SCF and a sensing terminal device (UE) based on an existing protocol stack, to control transmission of the sensing task related control signaling; and a new user plane protocol stack may be added between the SCF and the sensing terminal device (UE), to control transmission of the sensing measurement data.

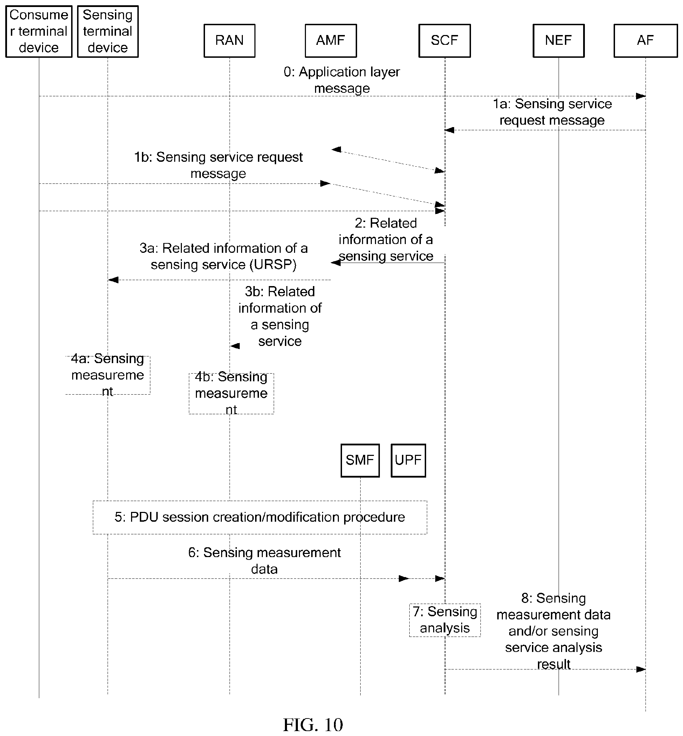

Steps 1 to 4 in this embodiment are similar to steps 1 to 4 in Embodiment 1. As shown in FIG. 10, the difference lies in the following points.

Optionally, at any moment before step 4, a policy control function (Policy Control Function, PCF) of the network may send one or more new UE route selection policies (URSP) to the UE through the AMF, where the URSP is used to indicate the UE to transmit measurement data of the related sensing service to the network through a particular PDU session or indicate the UE to offload the measurement data to a non-3gpp tunnel for transmission to the network.

In an example, in step 3a, the related information of the sensing service carries the URSP. Alternatively, in step 3b and step 3c, the related information of the sensing service carries the URSP.

This step may occur in a procedure in which the sensing terminal device is registered with the network, or at another moment at which the URSP corresponding to the sensing service needs to be delivered after registration is completed.

In an example, in step 1a or 1b, when the sensing service is triggered, the AMF or the SCF may request, from the PCF, the URSP corresponding to the sensing terminal device, and the AMF/SCF sends the obtained URSP to the sensing terminal device through step 2 or 3a.

In a case that one sensing service has a plurality of URSPs, the plurality of URSPs may be sorted with a priority. In addition, the URSPs may correspond to different measurement data in the sensing service. To be specific, the URSP indicates the UE to route the different measurement data in the same sensing service to different PDU sessions or offload the different measurement data in the same sensing service to the non-3gpp tunnel.

Optionally, the URSP includes at least one of the following corresponding route selection description information: flow description information corresponding to the sensing service, sensing measurement data, time information, and position information.

The flow description information corresponding to the sensing service includes at least one of the following: type information of the sensing service, identifier information of the sensing service (for example, a sensing service application ID); an internet protocol (Internet Protocol, IP)/non-IP address corresponding to a sensing service server; and port number information corresponding to the sensing service.

Step 5: Optionally, if the sensing terminal device determines that there is no existing PDU session that can be used to transmit the measurement data corresponding to the sensing service, the sensing terminal device initiates a PDU session creation/modification procedure.

If the sensing terminal device determines that an existing PDU session can be used to transmit the measurement data corresponding to the sensing service, this step does not need to be initiated.

Step 6: The sensing terminal device sends the sensing measurement data to the UPF by using a user plane tunnel of the PDU session.

The UPF forwards the sensing measurement data to the SCF by using the Ny interface between the UPF and the SCF.

Steps 7 and 8 are the same as those in Embodiment 1.

Subsequently, the AF may further send the sensing measurement data and/or the sensing service analysis result to a consumer terminal device. Alternatively, step 8 may be replaced with the following: The SCF sends the sensing measurement data and/or the sensing service analysis result to a consumer terminal device.

It should be noted that the method for processing a sensing service provided in the embodiments of this application may be performed by an apparatus for processing a sensing service, or a control module that is in the apparatus for processing a sensing service and that is configured to perform the method for processing a sensing service. In the embodiments of this application, an example in which the apparatus for processing a sensing service performs the method for processing a sensing service is used to describe the apparatus for processing a sensing service provided in the embodiments of this application.

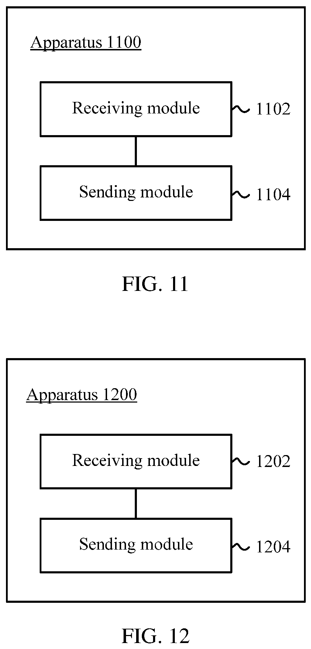

FIG. 11 is a schematic structural diagram of an apparatus for processing a sensing service according to an embodiment of this application. The apparatus may correspond to an SCF in another embodiment. As shown in FIG. 11, an apparatus 1100 includes the following modules:
a receiving module 1102, configured to receive a sensing service request message sent by a first device;
a sending module 1104, configured to: send sensing service control information to a sensing device, where the sensing service control information is generated by the apparatus according to the sensing service request message, and the sensing service control information is used to indicate the sensing device to obtain sensing measurement data; and
the receiving module 1102 is further configured to receive the sensing measurement data sent by the sensing device.

In this embodiment of this application, the receiving module receives the sensing service request message sent by the first device, the sending module sends the sensing service control information to the sensing device, where the sensing service control information is generated by the apparatus according to the sensing service request message, and is used to indicate the sensing device to obtain the sensing measurement data, and after the sensing device performs sensing measurement to generate the sensing measurement data, the receiving module may further receive the sensing measurement data sent by the sensing device. In this embodiment of this application, in addition to providing a function of data communication transmission, a wireless communication system can also provide a sensing function, to help implement fusion of wireless communication and radar sensing, thereby greatly reducing hardware deployment costs.

Optionally, in an embodiment, the sensing service control information is further used to indicate at least one of the following: the sensing device configures a sensing measurement resource; and the sensing device performs sensing measurement.

Optionally, in an embodiment, the receiving module 1102 is configured to perform one of the following operations: directly receiving the sensing service request message sent by the first device; receiving, through a network exposure function, the sensing service request message sent by the first device; or receiving, through an access and mobility management function, the sensing service request message sent by the first device, where the first device includes an application function AF or a consumer terminal device.

Optionally, in an embodiment, the sensing service request message includes at least one of the following: description information of the sensing service, an identifier of the consumer terminal device, and target range information of the sensing service.

Optionally, in an embodiment, the target range information of the sensing service includes range information corresponding to position information of the consumer terminal device.

Optionally, in an embodiment, the description information of the sensing service includes at least one of the following: type information of the sensing service; information about a sensing object; sensing quantity information of the sensing object; purpose or usage information of the sensing service; granularity information of the sensing service; execution time information of the sensing service; related reporting information of the sensing measurement data; and QoS information of the sensing service.

Optionally, in an embodiment, the sending module 1104 is configured to send the sensing service control information to the sensing device through an access and mobility management function, where the sensing device includes at least one of the following: a sensing terminal device and a sensing access network device.

Optionally, in an embodiment, the apparatus further includes a selection module, configured to perform at least one of the following operations: selecting the sensing device according to the sensing service request message sent by the first device; and selecting, according to an identifier or address information that is of the sensing device and that is obtained at the access and mobility management function, the sensing device.

Optionally, in an embodiment, the receiving module 1102 is configured to perform at least one of the following: receiving, through a control plane tunnel, the sensing measurement data sent by the sensing device; and receiving, through a user plane tunnel, the sensing measurement data sent by the sensing device.

Optionally, in an embodiment, when the sensing device is a sensing terminal device, the control plane tunnel includes a NAS signaling tunnel of the sensing terminal device.

Optionally, in an embodiment, when the sensing device is a sensing terminal device, the user plane tunnel includes a packet data PDU session tunnel of the sensing terminal device.

Optionally, in an embodiment, the receiving module 1102 may be configured to receive, through an access and mobility management function, the sensing measurement data sent by the sensing device, where the control plane tunnel includes a control plane tunnel between the SCF and the access and mobility management function.

Optionally, in an embodiment, the receiving module 1102 may be configured to receive, through a user plane function, the sensing measurement data sent by the sensing device, where the user plane tunnel includes a user plane tunnel between the SCF and the user plane function.

Optionally, in an embodiment, the sensing measurement data is sent by the sensing terminal device according to a UE route selection policy URSP, and the sending module 1104 may be further configured to request, from a policy control function, the URSP corresponding to the sensing terminal device, where the URSP includes a corresponding data path selection policy according to which the sensing device sends the sensing measurement data to the SCF; the receiving module 1102 may be further configured to receive the URSP sent by the policy control function; and the sending module 1104 may be further configured to send the received URSP to the sensing terminal device.

Optionally, in an embodiment, the sending module 1104 may be further configured to send at least one of the following to the first device: the sensing measurement data; and a sensing service analysis result obtained by the SCF according to the sensing measurement data.

The apparatus 1100 according to this embodiment of this application may correspond to the procedures of the method 200 in the embodiments of this application, and the units/modules in the apparatus 1100 and the foregoing operations and/or functions are separately for implementing the corresponding procedures of the method 200, and can achieve same or equivalent technical effect. For brevity, details are not described herein again.

FIG. 12 is a schematic structural diagram of an apparatus for processing a sensing service according to an embodiment of this application. The apparatus may correspond to an access and mobility management function in another embodiment. As shown in FIG. 12, an apparatus 1200 includes the following modules:
a receiving module 1202, configured to receive sensing service control information from an SCF; and
a sending module 1204, configured to send the sensing service control information to a sensing device, where the sensing service control information is used to indicate the sensing device to obtain sensing measurement data.

In this embodiment of this application, the receiving module receives the sensing service control information from the SCF, and the sending module sends the sensing service control information to the sensing device, where the sensing service control information is used to indicate the sensing device to obtain the sensing measurement data, and the sensing service control information is used to indicate the sensing device to obtain the sensing measurement data. In this way, the sensing device can perform sensing measurement to generate the sensing measurement data and send the sensing measurement data to the SCF. In this embodiment of this application, in addition to providing a function of data communication transmission, a wireless communication system can also provide a sensing function, to help implement fusion of wireless communication and radar sensing, thereby greatly reducing hardware deployment costs.

Optionally, in an embodiment, the sensing service control information is further used to indicate the sensing device to configure a sensing measurement resource.

Optionally, in an embodiment, the receiving module 1202 may be further configured to receive a sensing service request message sent by a first device; and the sending module 1204 may be further configured to send the sensing service request message to the SCF, where the first device includes an AF or a consumer terminal device.

Optionally, in an embodiment, the sensing service request message includes at least one of the following: description information of the sensing service, an identifier of the consumer terminal device, and target range information of the sensing service.

Optionally, in an embodiment, the target range information of the sensing service includes range information corresponding to position information of the consumer terminal device.

Optionally, in an embodiment, the description information of the sensing service includes at least one of the following: type information of the sensing service; information about a sensing object; sensing quantity information of the sensing object; purpose or usage information of the sensing service; granularity information of the sensing service; execution time information of the sensing service; related reporting information of the sensing measurement data; and QoS information of the sensing service.

Optionally, in an embodiment, the sensing device includes at least one of the following: a sensing terminal device and a sensing access network device.

Optionally, in an embodiment, the sending module 1204 may be further configured to send an identifier or address information of the sensing device to the SCF, where the identifier or the address information of the sensing device is used by the SCF to select the sensing device.

Optionally, in an embodiment, the receiving module 1202 may be further configured to receive the sensing measurement data sent by the sensing device; and the sending module 1204 may be further configured to send the sensing measurement data to the SCF.

Optionally, in an embodiment, the sensing device includes a sensing terminal device, the sending module 1204 may be further configured to request, from a policy control function, a URSP corresponding to the sensing terminal device, where the URSP includes a corresponding data path selection policy according to which the sensing device sends the sensing measurement data to the SCF; the receiving module 1202 may be further configured to receive the URSP sent by the policy control function; and the sending module 1204 may be further configured to send the received URSP to the sensing device.

The apparatus 1200 according to this embodiment of this application may correspond to the procedures of the method 300 in the embodiments of this application, and the units/modules in the apparatus 1200 and the foregoing operations and/or functions are separately for implementing the corresponding procedures of the method 300, and can achieve same or equivalent technical effect. For brevity, details are not described herein again.

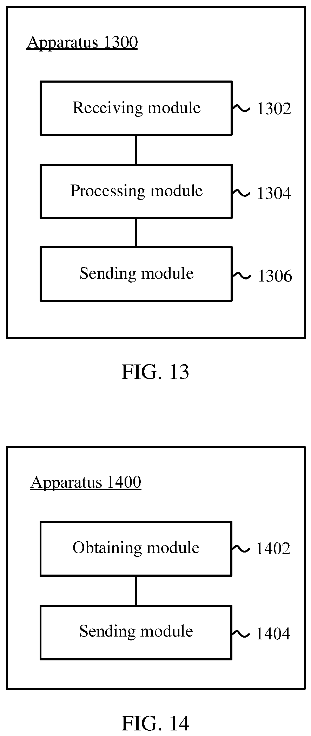

FIG. 13 is a schematic structural diagram of an apparatus for processing a sensing service according to an embodiment of this application. The apparatus may correspond to a sensing device in another embodiment. As shown in FIG. 13, an apparatus 1300 includes the following modules:
a receiving module 1302, configured to receive sensing service control information from an SCF, where the sensing service control information is used to indicate the apparatus to obtain sensing measurement data;
a processing module 1304, configured to obtain the sensing measurement data according to the sensing service control information; and
a sending module 1306, configured to send the sensing measurement data to the SCF.

In this embodiment of this application, the receiving module receives the sensing service control information from the SCF, the processing module obtains the sensing measurement data according to the sensing service control information, and the sending module sends the generated sensing measurement data. In this embodiment of this application, in addition to providing a function of data communication transmission, a wireless communication system can also provide a sensing function, to help implement fusion of wireless communication and radar sensing, thereby greatly reducing hardware deployment costs.

Optionally, in an embodiment, the processing module 1304 is configured to: perform sensing measurement according to the sensing service control information, to obtain the sensing measurement data; or, indicate, according to the sensing service control information, a second device to perform sensing measurement, to obtain the sensing measurement data sent by the second device.

Optionally, in an embodiment, the indicating, according to the sensing service control information, a second device to perform sensing measurement includes: configuring, by the processing module 1304, a sensing measurement resource according to the sensing service control information; and sending, by the sending module 1306, information about the sensing measurement resource to the second device, where the information about the sensing measurement resource is used to indicate the second device to perform sensing measurement.

Optionally, in an embodiment, the sending module 1306 is configured to perform at least one of the following operations: sending the sensing measurement data to the SCF through a control plane tunnel; and sending the sensing measurement data to the SCF through a user plane tunnel.

Optionally, in an embodiment, the sensing service control information includes at least one of the following: description information of the sensing service, an identifier of the consumer terminal device, and target range information of the sensing service.

Optionally, in an embodiment, the description information of the sensing service includes at least one of the following: type information of the sensing service; information about a sensing object; sensing quantity information of the sensing object; purpose or usage information of the sensing service; granularity information of the sensing service; execution time information of the sensing service; related reporting information of the sensing measurement data; and QoS information of the sensing service.

Optionally, in an embodiment, the sensing device includes at least one of the following: a sensing terminal device and a sensing access network device.

Optionally, in an embodiment, the sensing device includes a sensing terminal device, and the sending module 1306 is configured to send the sensing measurement data to the SCF through a NAS signaling tunnel or a packet data PDU session tunnel.

Optionally, in an embodiment, the sending module 1306 is configured to send the sensing measurement data to the SCF through a packet data PDU session channel; the receiving module 1302 is configured to receive a URSP corresponding to the sensing terminal device sent by a policy control function, where the URSP includes a corresponding data path selection policy according to which the sensing terminal device sends the sensing measurement data to the SCF; and the processing module 1304 is configured to establish or modify the PDU session tunnel according to the URSP.

The apparatus 1300 according to this embodiment of this application may correspond to the procedures of the method 400 in the embodiments of this application, and the units/modules in the apparatus 1300 and the foregoing operations and/or functions are separately for implementing the corresponding procedures of the method 400, and can achieve same or equivalent technical effect. For brevity, details are not described herein again.

FIG. 14 is a schematic structural diagram of an apparatus for processing a sensing service according to an embodiment of this application. The apparatus may correspond to a sensing device in another embodiment. As shown in FIG. 14, an apparatus 1400 includes the following modules:
an obtaining module 1402, configured to obtain a UE route selection policy URSP sent by a policy control function, where the URSP includes a corresponding data path selection policy according to which a sensing terminal device sends sensing measurement data to an SCF; and
a sending module 1404, configured to send the sensing measurement data to the SCF according to the URSP.

In this embodiment of this application, the obtaining module obtains the UE route selection policy URSP sent by the policy control function, where the URSP includes the corresponding data path selection policy according to which the sensing terminal device sends the sensing measurement data to the SCF; and the sending module sends the sensing measurement data to the SCF according to the URSP. In this embodiment of this application, in addition to providing a function of data communication transmission, a wireless communication system can also provide a sensing function, to help implement fusion of wireless communication and radar sensing, thereby greatly reducing hardware deployment costs.

Optionally, in an embodiment, the URSP includes at least one of the following corresponding route selection description information: flow description information corresponding to the sensing service, sensing measurement data, time information, and position information.

Optionally, in an embodiment, the obtaining module 1402 is configured to obtain, through an access and mobility management function, the UE route selection policy URSP sent by the policy control function.

The apparatus 1400 according to this embodiment of this application may correspond to the procedures of the method 500 in the embodiments of this application, and the units/modules in the apparatus 1400 and the foregoing operations and/or functions are separately for implementing the corresponding procedures of the method 500, and can achieve same or equivalent technical effect. For brevity, details are not described herein again.

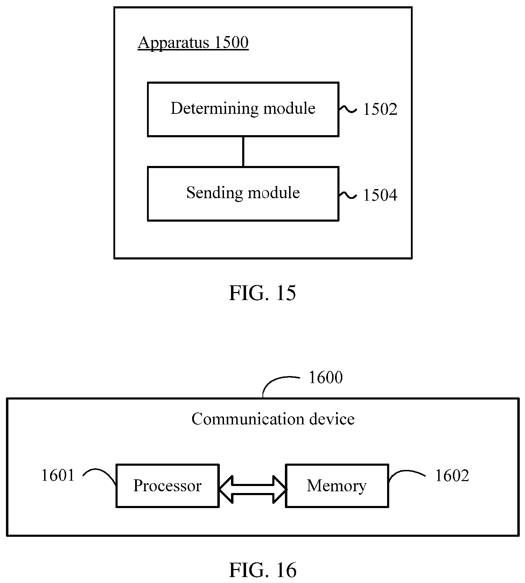

FIG. 15 is a schematic structural diagram of an apparatus for processing a sensing service according to an embodiment of this application. The apparatus may correspond to a policy control function in another embodiment. As shown in FIG. 15, an apparatus 1500 includes the following modules:
a determining module 1502, configured to determine a URSP corresponding to a sensing terminal device, where the URSP includes a corresponding data path selection policy according to which the sensing terminal device sends sensing measurement data to an SCF; and
a sending module 1504, configured to send the URSP to the sensing terminal device.

In this embodiment of this application, the determining module determines the URSP corresponding to the sensing terminal device, where the URSP includes the corresponding data path selection policy according to which the sensing terminal device sends the sensing measurement data to the SCF; and the sending module sends the URSP to the sensing terminal device. In this embodiment of this application, in addition to providing a function of data communication transmission, a wireless communication system can also provide a sensing function, to help implement fusion of wireless communication and radar sensing, thereby greatly reducing hardware deployment costs.

Optionally, in an embodiment, the URSP includes at least one of the following corresponding route selection description information: flow description information corresponding to the sensing service, sensing measurement data, time information, and position information.

Optionally, in an embodiment, the determining module 1502 may be further configured to receive a policy request message sent by an access and mobility management function or the SCF, where the policy request message is used to request the URSP corresponding to the sensing terminal device.

Optionally, in an embodiment, the sending module 1504 is configured to send the URSP to the sensing terminal device through the access and mobility management function.

The apparatus 1500 according to this embodiment of this application may correspond to the procedures of the method 600 in the embodiments of this application, and the units/modules in the apparatus 1500 and the foregoing operations and/or functions are separately for implementing the corresponding procedures of the method 600, and can achieve same or equivalent technical effect. For brevity, details are not described herein again.

The apparatus for processing a sensing service in this embodiment of this application may be an apparatus or an apparatus or electronic device with an operating system, or may be a component, an integrated circuit, or a chip in a terminal. The apparatus or electronic device may be a mobile terminal, or a non-mobile terminal. For example, the mobile terminal may include but is not limited to the foregoing listed types of the terminal 11, and the non-mobile terminal may be a server, a network attached storage (Network Attached Storage, NAS), a personal computer (personal computer, PC), a television (television, TV), a teller machine, or a self-service machine. This is not specifically limited in this embodiment of this application.

The apparatus for processing a sensing service provided in this embodiment of this application can implement the processes implemented in the method embodiments from FIG. 2 to FIG. 10, and same technical effect can be achieved. To avoid repetition, details are not described herein again.

Optionally, as shown in FIG. 16, an embodiment of this application further provides a communication device 1600, including a processor 1601, a memory 1602, and a program or an instruction that is stored in the memory 1602 and that can be run on the processor 1601. For example, when the communication device 1600 is a terminal, the program or the instruction is executed by the processor 1601 to implement the processes of the foregoing embodiments of the method for processing a sensing service, and same technical effect can be achieved. When the communication device 1600 is a network side device, the program or the instruction is executed by the processor 1601 to implement the processes of the foregoing embodiments of the method for processing a sensing service, and same technical effect can be achieved. To avoid repetition, details are not described herein again.

An embodiment of this application further provides a terminal, including a processor and a communication interface. The communication interface is configured to receive sensing service control information from an SCF, where the sensing service control information is used to indicate the terminal to obtain sensing measurement data; the processor is configured to obtain the sensing measurement data according to the sensing service control information; the communication interface is further configured to send the sensing measurement data to the SCF; or the communication interface is configured to: obtain a URSP sent by a policy control function, where the URSP includes a corresponding data path selection policy according to which the sensing terminal device (that is, the terminal is used as the sensing terminal device) sends the sensing measurement data to the SCF; and send the sensing measurement data to the SCF according to the URSP.

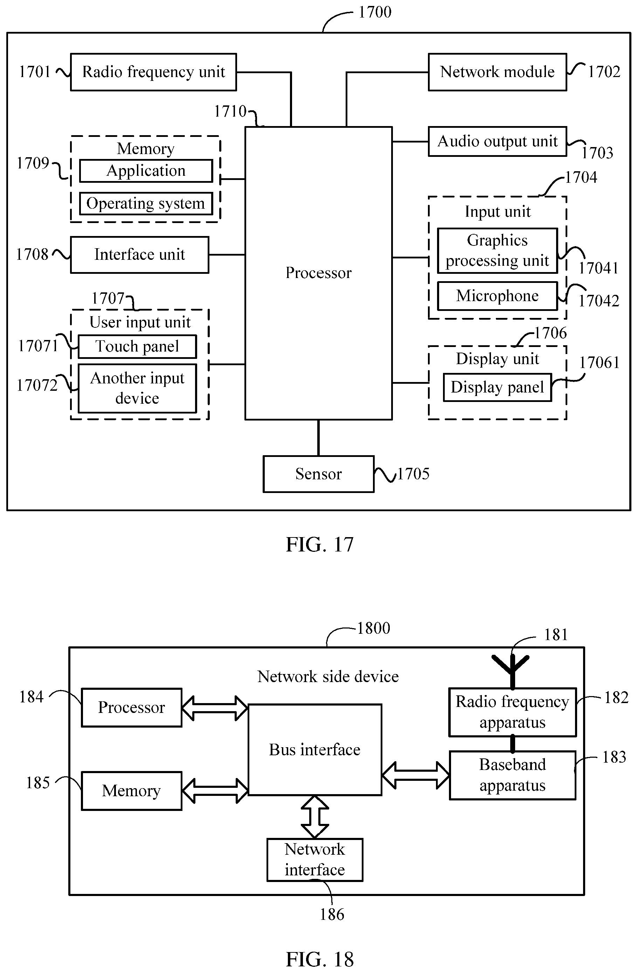

This terminal embodiment corresponds to the foregoing method embodiment on the terminal side. Each implementation process and implementation of the foregoing method embodiment may be applicable to this terminal embodiment, and same technical effect can be achieved. Specifically, FIG. 17 is a schematic diagram of a hardware structure of a terminal according to an embodiment of this application.

The terminal 1700 includes but is not limited to at least some components in a radio frequency unit 1701, a network module 1702, an audio output unit 1703, an input unit 1704, a sensor 1705, a display unit 1706, a user input unit 1707, an interface unit 1708, a memory 1709, and a processor 1710.

A person skilled in the art can understand that the terminal 1700 may further include a power supply (such as a battery) that supplies power to each component. The power supply may be logically connected to the processor 1710 by using a power management system, to implement functions such as charging and discharging management, and power consumption management by using the power management system. The terminal structure shown in FIG. 17 constitutes no limitation on the terminal, and the terminal may include more or fewer components than those shown in the figure, or combine some components, or have different component arrangements. Details are not described herein.

It should be understood that, in this embodiment of this application, the input unit 1704 may include a graphics processing unit (Graphics Processing Unit, GPU) 17041 and a microphone 17042, and the graphics processing unit 17041 processes image data of a still picture or video obtained by an image capture apparatus (such as a camera) in a video capture mode or an image capture mode. The display unit 1706 may include a display panel 17061. The display panel 17061 may be configured in a form such as a liquid crystal display or an organic light-emitting diode. The user input unit 1707 includes a touch panel 17071 and another input device 17072. The touch panel 17071 is also referred to as a touchscreen. The touch panel 17071 may include two parts: a touch detection apparatus and a touch controller. The another input device 17072 may include but is not limited to a physical keyboard, a functional button (such as a volume control button or a power on/off button), a trackball, a mouse, and a joystick. Details are not described herein.

In this embodiment of this application, the radio frequency unit 1701 receives downlink data from a network side device and then sends the downlink data to the processor 1710 for processing; and sends uplink data to the network side device. Usually, the radio frequency unit 1701 includes but is not limited to an antenna, at least one amplifier, a transceiver, a coupler, a low noise amplifier, a duplexer, and the like.

The memory 1709 may be configured to store a software program or an instruction and various data. The memory 1709 may mainly include a program or instruction storage area and a data storage area. The program or instruction storage area may store an operating system, an application or an instruction required by at least one function (for example, a sound playing function or an image playing function), and the like. In addition, the memory 1709 may include a high-speed random access memory, and may further include a non-transitory memory. The non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory, or another non-transient solid-state storage device.

The processor 1710 may include one or more processing units. Optionally, an application processor and a modem processor may be integrated into the processor 1710. The application processor mainly processes an operating system, a user interface, an application, an instruction, or the like. The modem processor mainly processes wireless communication, for example, a baseband processor. It may be understood that, alternatively, the modem processor may not be integrated into the processor 1710.

The radio frequency unit 1701 is configured to receive sensing service control information from an SCF, where the sensing service control information is used to indicate the terminal to obtain sensing measurement data; the processor 1710 is configured to obtain the sensing measurement data according to the sensing service control information; and the radio frequency unit 1701 is further configured to send the generated sensing measurement data.

Alternatively, the radio frequency unit 1701 is configured to: obtain a URSP sent by a policy control function, where the URSP includes a corresponding data path selection policy according to which the sensing terminal device sends the sensing measurement data to the SCF; and send the sensing measurement data to the SCF according to the URSP.

In this embodiment of this application, the sensing terminal device receives the sensing service control information from the SCF, where the sensing service control information is used to indicate the sensing terminal device to obtain the sensing measurement data; and the sensing terminal device obtains the sensing measurement data according to the sensing service control information, and sends the generated sensing measurement data. Alternatively, the sensing terminal device obtains the URSP sent by the policy control function, where the URSP includes the corresponding data path selection policy according to which the sensing terminal device sends the sensing measurement data to the SCF; and the sensing terminal device sends the sensing measurement data to the SCF according to the URSP.

In this embodiment of this application, in addition to providing a function of data communication transmission, a wireless communication system can also provide a sensing function, to help implement fusion of wireless communication and radar sensing, thereby greatly reducing hardware deployment costs.

The terminal 1700 provided in this embodiment of this application may also implement the processes of the foregoing embodiments of the method for processing a sensing service, and same technical effect can be achieved. To avoid repetition, details are not described herein again.

An embodiment of this application further provides a network side device, including a processor and a communication interface. The processor and the communication interface may be configured to perform the methods in the embodiments of FIG. 2 to FIG. 6. The network side device embodiment corresponds to the foregoing method embodiment of the network side device. Each implementation process and implementation of the foregoing method embodiment may be applicable to the network side device embodiment, and same technical effect can be achieved.

Specifically, an embodiment of this application further provides a network side device. As shown in FIG. 18, the network side device 1800 includes an antenna 181, a radio frequency apparatus 182, and a baseband apparatus 183. The antenna 181 is connected to the radio frequency apparatus 182. In an uplink direction, the radio frequency apparatus 182 receives information by using the antenna 181, and sends the received information to the baseband apparatus 183 for processing. In a downlink direction, the baseband apparatus 183 processes to-be-sent information, and sends the information to the radio frequency apparatus 182. The radio frequency apparatus 182 processes the received information and then sends the information by using the antenna 181.

The frequency band processing apparatus may be located in the baseband apparatus 183. The method performed by the network side device in the foregoing embodiment may be implemented in the baseband apparatus 183. The baseband apparatus 183 includes a processor 184 and a memory 185.

The baseband apparatus 183 may include, for example, at least one baseband board, where a plurality of chips are disposed on the baseband board. As shown in FIG. 18, one chip, for example, the processor 184, is connected to the memory 185, to invoke a program in the memory 185 to perform the operations of the network side device shown in the foregoing method embodiment.

The baseband apparatus 183 may further include a network interface 186, configured to exchange information with the radio frequency apparatus 182. For example, the interface is a common public radio interface (common public radio interface, CPRI for short).

Specifically, the network side device in this embodiment of this application further includes an instruction or a program that is stored in the memory 185 and that can be run on the processor 184. The processor 184 invokes the instruction or the program in the memory 185 to perform the method performed by the modules shown in FIG. 11 to FIG. 15, and same technical effect can be achieved. To avoid repetition, details are not provided herein again.

It should be noted that, when the network side device 1800 is a core network device, the antenna 181, the radio frequency apparatus 182, and the baseband apparatus 183 may not be included.

An embodiment of this application further provides a readable storage medium. The readable storage medium stores a program or an instruction. When the program or the instruction is executed by a processor, the processes of the foregoing embodiments of the method for processing a sensing service are implemented, and same technical effect can be achieved. To avoid repetition, details are not described herein again.

The processor is the processor in the terminal described in the foregoing embodiments. The readable storage medium includes a computer-readable storage medium, such as a computer read-only memory (Read-Only Memory, ROM), a random access memory (Random Access Memory, RAM), a magnetic disk, a compact disc, or the like.

An embodiment of this application further provides a chip. The chip includes a processor and a communication interface, the communication interface is coupled to the processor, and the processor is configured to run a program or an instruction to implement the processes of the foregoing embodiments of the method for processing a sensing service, and same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program product. The computer program product is stored in a nonvolatile memory. The computer program product is executed by at least one processor to implement the processes of the foregoing embodiments of the method for processing a sensing service, and same technical effect can be achieved. To avoid repetition, details are not described herein again.

An embodiment of this application further provides a communication device, configured to implement the processes of the foregoing embodiments of the method for processing a sensing service, and same technical effect can be achieved. To avoid repetition, details are not repeated herein.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. An element limited by "includes a ..." does not, without more constraints, preclude the presence of additional identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiments may be implemented by software in addition to a necessary universal hardware platform or by hardware only. In most circumstances, the former is a preferred implementation. Based on such an understanding, the technical schemes of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air conditioner, a network side device, or the like) to perform the methods described in the embodiments of this application.

Although the invention has been explained in relation to its preferred embodiment(s) as mentioned above, it is to be understood that many other possible modifications and variations can be made without departing from the scope of the present invention, which is defined by the claims.

## Claims

1. A method for processing a sensing service, the method comprising:
receiving (S202), by a sensing control function, SCF, a sensing service request message sent by a first device;
sending (S204), by the SCF, sensing service control information to a sensing device, wherein the sensing service control information is generated by the SCF according to the sensing service request message, and the sensing service control information is used to indicate the sensing device to obtain sensing measurement data; and
receiving (S206), by the SCF, the sensing measurement data sent by the sensing device,
wherein the sending (S204), by the SCF, sensing service control information to a sensing device comprises:
sending, by the SCF through an access and mobility management function, the sensing service control information to the sensing device, wherein
the sensing device comprises at least one of the following: a sensing terminal device and a sensing access network device;
wherein before the sending (S204), by the SCF, sensing service control information to the sensing device, the method further comprises at least one of the following:
selecting, by the SCF, the sensing device according to the sensing service request message sent by the first device; and
selecting, by the SCF, the sensing device according to an identifier or address information that is of the sensing device and that is obtained at the access and mobility management function.

2. The method according to claim 1, wherein the sensing service control information is further used to indicate at least one of the following: the sensing device configures a sensing measurement resource; and the sensing device performs sensing measurement; or,
wherein the receiving (S202), by an SCF, a sensing service request message sent by a first device comprises:
directly receiving, by the SCF, the sensing service request message sent by the first device;
receiving, by the SCF through a network exposure function, the sensing service request message sent by the first device; or
receiving, by the SCF through an access and mobility management function, the sensing service request message sent by the first device, wherein
the first device comprises an application function, AF, or a consumer terminal device.

3. The method according to claim 1, wherein the sensing service request message comprises at least one of the following: description information of the sensing service, an identifier of the consumer terminal device, and target range information of the sensing service;
wherein the target range information of the sensing service comprises range information corresponding to position information of the consumer terminal device; or,
wherein the description information of the sensing service comprises at least one of the following:
type information of the sensing service; information about a sensing object; sensing quantity information of the sensing object; purpose or usage information of the sensing service; granularity information of the sensing service; execution time information of the sensing service; related reporting information of the sensing measurement data; and quality of service, QoS, information of the sensing service.

4. The method according to claim 1, wherein the receiving (S206), by the SCF, the sensing measurement data sent by the sensing device comprises at least one of the following:
receiving, by the SCF through a control plane tunnel, the sensing measurement data sent by the sensing device; and
receiving, by the SCF through a user plane tunnel, the sensing measurement data sent by the sensing device.

5. The method according to claim 4, wherein when the sensing device is a sensing terminal device, the control plane tunnel comprises a non-access stratum, NAS, signaling tunnel of the sensing terminal device.

6. The method according to claim 4, wherein when the sensing device is a sensing terminal device, the user plane tunnel comprises a packet data PDU session tunnel of the sensing terminal device.

7. The method according to claim 4, wherein the receiving, by the SCF through a control plane tunnel, the sensing measurement data sent by the sensing device comprises:
receiving, by the SCF through an access and mobility management function, the sensing measurement data sent by the sensing device, wherein the control plane tunnel comprises a control plane tunnel between the SCF and the access and mobility management function; or,
wherein the receiving, by the SCF through a user plane tunnel, the sensing measurement data sent by the sensing device comprises:
receiving, by the SCF through a user plane function, the sensing measurement data sent by the sensing device, wherein the user plane tunnel comprises a user plane tunnel between the SCF and the user plane function.

8. The method according to claim 6, wherein the sensing measurement data is sent by the sensing terminal device according to a UE route selection policy, URSP, and the method further comprises:
requesting, by the SCF from a policy control function, the URSP corresponding to the sensing terminal device, wherein the URSP comprises a corresponding data path selection policy according to which the sensing device sends the sensing measurement data to the SCF;
receiving, by the SCF, the URSP sent by the policy control function; and
sending, by the SCF, the received URSP to the sensing terminal device.

9. The method according to claim 1, wherein the method further comprises: sending, by the SCF to the first device, at least one of the following:
the sensing measurement data; and
a sensing service analysis result obtained by the SCF according to the sensing measurement data.

10. A method for processing a sensing service, the method comprising:
receiving (S402), by a sensing device, sensing service control information from an SCF, wherein the sensing service control information is used to indicate the sensing device to obtain sensing measurement data;
obtaining (S404), by the sensing device, the sensing measurement data according to the sensing service control information; and
sending (S406), by the sensing device, the sensing measurement data to the SCF;
wherein the sensing service control information is sent by the SCF through an access and mobility management function to the sensing device;
the sensing device comprises at least one of the following: a sensing terminal device and a sensing access network device;
wherein the sensing device is selected by the SCF according to the sensing service request message sent by the first device, or
the sensing device is selected by the SCF according to an identifier or address information that is of the sensing device and that is obtained at the access and mobility management function.

11. An apparatus (1100) for processing a sensing service, the apparatus comprising:
a receiving module (1102), configured to receive a sensing service request message sent by a first device;
a sending module (1104), configured to: send sensing service control information to a sensing device, wherein the sensing service control information is generated by the apparatus according to the sensing service request message, and the sensing service control information is used to indicate the sensing device to obtain sensing measurement data; and
the receiving module is further configured to receive the sensing measurement data sent by the sensing device;
wherein the sending module (1104) is configured to send, by the SCF through an access and mobility management function, the sensing service control information to the sensing device, wherein
the sensing device comprises at least one of the following: a sensing terminal device and a sensing access network device;
wherein before the sending (S204), by the SCF, sensing service control information to the sensing device, the sending module (1104) is further configured to perform at least one of the following:
selecting, by the SCF, the sensing device according to the sensing service request message sent by the first device; and
selecting, by the SCF, the sensing device according to an identifier or address information that is of the sensing device and that is obtained at the access and mobility management function.

12. An apparatus (1300) for processing a sensing service, the apparatus comprising:
a receiving module (1302), configured to receive sensing service control information from an SCF, wherein the sensing service control information is used to indicate the apparatus to obtain sensing measurement data;
a processing module (1304), configured to obtain the sensing measurement data according to the sensing service control information; and
a sending module (1306), configured to send the sensing measurement data to the SCF;
wherein the sensing service control information is sent by the SCF through an access and mobility management function to the sensing device;
the sensing device comprises at least one of the following: a sensing terminal device and a sensing access network device;
wherein the sensing device is selected by the SCF according to the sensing service request message sent by the first device, or
the sensing device is selected by the SCF according to an identifier or address information that is of the sensing device and that is obtained at the access and mobility management function.

## Patentansprüche

1. Verfahren zum Verarbeiten eines Erfassungsdienstes, wobei das Verfahren Folgendes umfasst:
Empfangen (S202), durch eine Erfassungssteuerfunktion, SCF, einer Erfassungsdienstanforderungsnachricht, die von einer ersten Vorrichtung gesendet wird;
Senden (S204), durch die SCF, von Erfassungsdienststeuerinformationen an eine Erfassungsvorrichtung, wobei die Erfassungsdienststeuerinformationen durch die SCF gemäß der Erfassungsdienstanforderungsnachricht erzeugt werden und die Erfassungsdienststeuerinformationen verwendet werden, um die Erfassungsvorrichtung anzuweisen, Erfassungsmessdaten zu erhalten; und
Empfangen (S206), durch die SCF, der Erfassungsmessdaten, die von der Erfassungsvorrichtung gesendet werden,
wobei das Senden (S204), durch die SCF, von Erfassungsdienststeuerinformationen an eine Erfassungsvorrichtung Folgendes umfasst:
Senden, durch die SCF über eine Zugriffs- und Mobilitätsverwaltungsfunktion, der Erfassungsdienststeuerinformationen an die Erfassungsvorrichtung, wobei
die Erfassungsvorrichtung mindestens eine der Folgenden umfasst: eine Erfassungsendgerätvorrichtung und eine Erfassungszugriffsnetzwerkvorrichtung;
wobei das Verfahren vor dem Senden (S204), durch die SCF, von Erfassungsdienststeuerinformationen an die Erfassungsvorrichtung ferner mindestens eines der Folgenden umfasst:
Auswählen, durch den SCF, der Erfassungsvorrichtung gemäß der Erfassungsdienstanforderungsnachricht, die von der ersten Vorrichtung gesendet wird; und
Auswählen, durch die SCF, der Erfassungsvorrichtung gemäß einer Kennung oder Adressinformationen, die von der Erfassungsvorrichtung stammt/en und die bei der Zugriffs- und Mobilitätsverwaltungsfunktion erhalten wird/werden.

2. Verfahren nach Anspruch 1, wobei die Erfassungsdienststeuerinformationen ferner verwendet werden, um mindestens eine der Folgenden anzuweisen: die Erfassungsvorrichtung konfiguriert eine Erfassungsmessressource; und die Erfassungsvorrichtung führt eine Erfassungsmessung durch; oder
wobei das Empfangen (S202), durch eine SCF, einer Erfassungsdienstanforderungsnachricht, die von einer ersten Vorrichtung gesendet wird, Folgendes umfasst:
direktes Empfangen, durch die SCF, der Erfassungsdienstanforderungsnachricht, die von der ersten Vorrichtung gesendet wird;
Empfangen, durch die SCF über eine Netzwerk-Exposure-Funktion, der Erfassungsdienstanforderungsnachricht, die von der ersten Vorrichtung gesendet wird; oder
Empfangen, durch die SCF über eine Zugriffs- und Mobilitätsverwaltungsfunktion, der Erfassungsdienstanforderungsnachricht, die von der ersten Vorrichtung gesendet wird, wobei
die erste Vorrichtung eine Anwendungsfunktion, AF, oder eine Verbraucherendgerätvorrichtung umfasst.

3. Verfahren nach Anspruch 1, wobei die Erfassungsdienstanforderungsnachricht mindestens eine der Folgenden umfasst: Beschreibungsinformationen des Erfassungsdienstes, eine Kennung der Verbraucherendgerätvorrichtung und Zielbereichsinformationen des Erfassungsdienstes;
wobei die Zielbereichsinformationen des Erfassungsdienstes Bereichsinformationen umfassen, die Positionsinformationen der Verbraucherendgerätvorrichtung entsprechen; oder
wobei die Beschreibungsinformationen des Erfassungsdienstes mindestens eine der Folgenden umfassen:
Typinformationen des Erfassungsdienstes; Informationen über ein Erfassungsobjekt;
Erfassungsmengeninformationen des Erfassungsobjekts; Zweck- oder Nutzungsinformationen des Erfassungsdienstes; Granularitätsinformationen des Erfassungsdienstes; Ausführungszeitinformationen des Erfassungsdienstes; zugehörige Berichtsinformationen der Erfassungsmessdaten; und Quality of Service, QoS, - Informationen des Erfassungsdienstes.

4. Verfahren nach Anspruch 1, wobei das Empfangen (S206), durch die SCF, der Erfassungsmessdaten, die von der Erfassungsvorrichtung gesendet werden, mindestens eines der Folgenden umfasst:
Empfangen, durch die SCF über einen Steuerebenentunnel, der Erfassungsmessdaten, die von der Erfassungsvorrichtung gesendet werden; und
Empfangen, durch die SCF über einen Benutzerebenentunnel, der Erfassungsmessdaten, die von der Erfassungsvorrichtung gesendet werden.

5. Verfahren nach Anspruch 4, wobei, wenn die Erfassungsvorrichtung eine Erfassungsendgerätvorrichtung ist, der Steuerebenentunnel einen Nicht-Zugriffsschicht-, NAS-, Signaltunnel der Erfassungsendgerätvorrichtung umfasst.

6. Verfahren nach Anspruch 4, wobei, wenn die Erfassungsvorrichtung eine Erfassungsendgerätvorrichtung ist, der Benutzerebenentunnel einen Paketdaten-PDU-Sitzungstunnel der Erfassungsendgerätvorrichtung umfasst.

7. Verfahren nach Anspruch 4, wobei das Empfangen, durch die SCF über einen Steuerebenentunnel, der Erfassungsmessdaten, die von der Erfassungsvorrichtung gesendet werden, Folgendes umfasst:
Empfangen, durch die SCF über eine Zugriffs- und Mobilitätsverwaltungsfunktion, der Erfassungsmessdaten, die von der Erfassungsvorrichtung gesendet werden, wobei der Steuerebenentunnel einen Steuerebenentunnel zwischen der SCF und der Zugriffs- und Mobilitätsverwaltungsfunktion umfasst; oder
wobei das Empfangen, durch die SCF über einen Benutzerebenentunnel, der Erfassungsmessdaten, die von der Erfassungsvorrichtung gesendet werden, Folgendes umfasst:
Empfangen, durch die SCF über eine Benutzerebenenfunktion, der Erfassungsmessdaten, die von der Erfassungsvorrichtung gesendet werden, wobei der Benutzerebenentunnel einen Benutzerebenentunnel zwischen der SCF und der Benutzerebenenfunktion umfasst.

8. Verfahren nach Anspruch 6, wobei die Erfassungsmessdaten von der Erfassungsendgerätvorrichtung gemäß einer UE-Routenauswahlrichtlinie, URSP, gesendet werden und das Verfahren ferner Folgendes umfasst:
Anfordern, durch die SCF von einer Richtliniensteuerfunktion, der URSP, der der Erfassungsendgerätvorrichtung entspricht, wobei die URSP eine entsprechende Datenpfadauswahlrichtlinie umfasst, gemäß der die Erfassungsvorrichtung die Erfassungsmessdaten an die SCF sendet;
Empfangen, durch die SCF, der URSP, der von der Richtliniensteuerfunktion gesendet wird; und
Senden, durch die SCF, der empfangenen URSP an die Erfassungsendgerätvorrichtung.

9. Verfahren nach Anspruch 1, wobei das Verfahren ferner Folgendes umfasst: Senden, durch die SCF an die erste Vorrichtung, mindestens eines/r der Folgenden:
der Erfassungsmessdaten; und
eines Erfassungsdienstanalyseergebnisses, das durch die SCF gemäß den Erfassungsmessdaten erhalten wird.

10. Verfahren zum Verarbeiten eines Erfassungsdienstes, wobei das Verfahren Folgendes umfasst:
Empfangen (S402), durch eine Erfassungsvorrichtung, von Erfassungsdienststeuerinformationen von einer SCF, wobei die Erfassungsdienststeuerinformationen verwendet werden, um die Erfassungsvorrichtung anzuweisen, Erfassungsmessdaten zu erhalten;
Erhalten (S404), durch die Erfassungsvorrichtung, der Erfassungsmessdaten gemäß den Erfassungsdienststeuerinformationen; und
Senden (S406), durch die Erfassungsvorrichtung, der Erfassungsmessdaten an die SCF;
wobei die Erfassungsdienststeuerinformationen durch die SCF über eine Zugriffs- und Mobilitätsverwaltungsfunktion an die Erfassungsvorrichtung gesendet werden;
die Erfassungsvorrichtung mindestens eine der Folgenden umfasst: eine Erfassungsendgerätvorrichtung und eine Erfassungszugriffsnetzwerkvorrichtung;
wobei die Erfassungsvorrichtung durch die SCF gemäß der Erfassungsdienstanforderungsnachricht ausgewählt wird, die von der ersten Vorrichtung gesendet wird, oder
die Erfassungsvorrichtung durch die SCF gemäß einer Kennung oder Adressinformationen ausgewählt wird, die von der Erfassungsvorrichtung stammt/en und die bei der Zugriffs- und Mobilitätsverwaltungsfunktion erhalten wird/werden.

11. Gerät (1100) zum Verarbeiten eines Erfassungsdienstes, wobei das Gerät Folgendes umfasst:
ein Empfangsmodul (1102), das dazu ausgelegt ist, eine Erfassungsdienstanforderungsnachricht zu empfangen, die von einer ersten Vorrichtung gesendet wird;
ein Sendemodul (1104), das zu Folgendem ausgelegt ist:
Senden von Erfassungsdienststeuerinformationen an eine Erfassungsvorrichtung, wobei die Erfassungsdienststeuerinformationen durch das Gerät gemäß der Erfassungsdienstanforderungsnachricht erzeugt werden und die Erfassungsdienststeuerinformationen verwendet werden, um die Erfassungsvorrichtung anzuweisen, Erfassungsmessdaten zu erhalten; und
das Empfangsmodul ferner dazu ausgelegt ist, die Erfassungsmessdaten zu empfangen, die von der Erfassungsvorrichtung gesendet werden;
wobei das Sendemodul (1104) ausgelegt ist, um durch die SCF über eine Zugriffs- und Mobilitätsverwaltungsfunktion, die Erfassungsdienststeuerinformationen an die Erfassungsvorrichtung zu senden, wobei
die Erfassungsvorrichtung mindestens eine der Folgenden umfasst: eine Erfassungsendgerätvorrichtung und eine Erfassungszugriffsnetzwerkvorrichtung;
wobei vor dem Senden (S204), durch die SCF, von Erfassungsdienststeuerinformationen an die Erfassungsvorrichtung, das Sendemodul (1104) ferner ausgelegt ist, um mindestens eines der Folgenden auszuführen:
Auswählen, durch den SCF, der Erfassungsvorrichtung gemäß der Erfassungsdienstanforderungsnachricht, die von der ersten Vorrichtung gesendet wird; und
Auswählen, durch die SCF, der Erfassungsvorrichtung gemäß einer Kennung oder Adressinformationen, die von der Erfassungsvorrichtung stammt/en und die bei der Zugriffs- und Mobilitätsverwaltungsfunktion erhalten wird/werden.

12. Gerät (1300) zum Verarbeiten eines Erfassungsdienstes, wobei das Gerät Folgendes umfasst:
ein Empfangsmodul (1302), das dazu ausgelegt ist, Erfassungsdienststeuerinformationen von einer SCF zu empfangen, wobei die Erfassungsdienststeuerinformationen verwendet werden, um das Gerät anzuweisen, Erfassungsmessdaten zu erhalten;
ein Verarbeitungsmodul (1304), das ausgelegt ist, um die Erfassungsmessdaten gemäß den Erfassungsdienststeuerinformationen zu erhalten; und
ein Sendemodul (1306), das ausgelegt ist, um die Erfassungsmessdaten an die SCF zu senden;
wobei die Erfassungsdienststeuerinformationen durch die SCF über eine Zugriffs- und Mobilitätsverwaltungsfunktion an die Erfassungsvorrichtung gesendet werden;
die Erfassungsvorrichtung mindestens eine der Folgenden umfasst: eine Erfassungsendgerätvorrichtung und eine Erfassungszugriffsnetzwerkvorrichtung;
wobei die Erfassungsvorrichtung durch die SCF gemäß der Erfassungsdienstanforderungsnachricht ausgewählt wird, die von der ersten Vorrichtung gesendet wird, oder
die Erfassungsvorrichtung durch die SCF gemäß einer Kennung oder Adressinformationen ausgewählt wird, die von der Erfassungsvorrichtung stammt/en und die bei der Zugriffs- und Mobilitätsverwaltungsfunktion erhalten wird/werden.

## Revendications

1. Procédé de traitement d'un service de détection, le procédé comprenant :
recevoir (S202), par une fonction de commande de détection, SCF, un message de demande de service de détection envoyé par un premier dispositif ;
envoyer (S204), par la SCF, des informations de commande de service de détection à un dispositif de détection, dans lequel les informations de commande de service de détection sont générées par la SCF selon le message de demande de service de détection, et les informations de commande de service de détection sont utilisées pour indiquer au dispositif de détection d'obtenir des données de mesure de détection ; et
recevoir (S206), par la SCF, les données de mesure de détection envoyées par le dispositif de détection,
dans lequel l'envoi (S204), par la SCF, d'informations de commande de service de détection à un dispositif de détection comprend :
envoyer, par la SCF, via une fonction de gestion d'accès et de mobilité, les informations de commande de service de détection au dispositif de détection, dans lequel le dispositif de détection comprend au moins l'un des dispositifs suivants : un dispositif terminal de détection et un dispositif de réseau d'accès de détection ;
dans lequel, avant l'envoi (S204), par la SCF, d'informations de commande de service de détection au dispositif de détection, le procédé comprend en outre au moins l'une des opérations suivantes :
sélectionner, par la SCF, le dispositif de détection selon le message de demande de service de détection envoyé par le premier dispositif ; et
sélectionner, par la SCF, le dispositif de détection selon un identifiant ou des informations d'adresse étant du dispositif de détection et étant obtenu(es) au niveau de la fonction de gestion d'accès et de mobilité.

2. Procédé selon la revendication 1, dans lequel les informations de commande de service de détection sont en outre utilisées pour indiquer au moins l'un des opérations suivantes : le dispositif de détection configure une ressource de mesure de détection ; et le dispositif de détection effectue une mesure de détection ; ou,
dans lequel la réception (S202), par une SCF, d'un message de demande de service de détection envoyé par un premier dispositif comprend :
recevoir directement, par la SCF, le message de demande de service de détection envoyé par le premier dispositif ;
recevoir, par la SCF, via une fonction d'exposition de réseau, le message de demande de service de détection envoyé par le premier dispositif ; ou
recevoir, par la SCF, via une fonction de gestion d'accès et de mobilité, le message de demande de service de détection envoyé par le premier dispositif, dans lequel le premier dispositif comprend une fonction d'application, AP, ou un dispositif terminal de consommateur.

3. Procédé selon la revendication 1, dans lequel le message de demande de service de détection comprend au moins l'un des éléments suivants : des informations de description du service de détection, un identifiant du dispositif terminal de consommateur, et des informations de plage cible du service de détection ;
dans lequel les informations de plage cible du service de détection comprennent des informations de plage correspondant aux informations de position du dispositif terminal de consommateur ; ou,
dans lequel les informations de description du service de détection comprennent au moins l'une des informations suivantes :
des informations de type du service de détection ; des informations concernant un objet de détection ; des informations de quantité de détection de l'objet de détection ; des informations d'objectif ou d'utilisation du service de détection ; des informations de granularité du service de détection ; des informations de temps d'exécution du service de détection ; des informations de rapport liées aux données de mesure de détection ; et des informations de qualité de service, QoS, du service de détection.

4. Procédé selon la revendication 1, dans lequel la réception (S206), par la SCF, des données de mesure de détection envoyées par le dispositif de détection comprend au moins l'une des opérations suivantes :
recevoir, par la SCF, via un tunnel de plan de commande, les données de mesure de détection envoyées par le dispositif de détection ; et
recevoir, par la SCF, via un tunnel de plan d'utilisateur, les données de mesure de détection envoyées par le dispositif de détection.

5. Procédé selon la revendication 4, dans lequel, lorsque le dispositif de détection est un dispositif terminal de détection, le tunnel de plan de commande comprend un tunnel de signalisation de strate de non-accès, NAS, du dispositif terminal de détection.

6. Procédé selon la revendication 4, dans lequel, lorsque le dispositif de détection est un dispositif terminal de détection, le tunnel de plan d'utilisateur comprend un tunnel de session de données par paquets PDU du dispositif terminal de détection.

7. Procédé selon la revendication 4, dans lequel la réception, par la SCF, via un tunnel de plan de commande, des données de mesure de détection envoyées par le dispositif de détection comprend :
recevoir, par la SCF, via une fonction de gestion d'accès et de mobilité, les données de mesure de détection envoyées par le dispositif de détection, dans lequel le tunnel de plan de commande comprend un tunnel de plan de commande entre la SCF et la fonction de gestion d'accès et de mobilité ; ou,
dans lequel la réception, par la SCF, via un tunnel de plan d'utilisateur, des données de mesure de détection envoyées par le dispositif de détection comprend :
recevoir, par la SCF via une fonction de plan d'utilisateur, des données de mesure de détection envoyées par le dispositif de détection, dans lequel le tunnel de plan d'utilisateur comprend un tunnel de plan d'utilisateur entre la SCF et la fonction de plan d'utilisateur.

8. Procédé selon la revendication 6, dans lequel les données de mesure de détection sont envoyées par le dispositif terminal de détection selon une politique de sélection d'itinéraire d'UE, URSP, et le procédé comprend en outre :
demander, par la SCF, à partir d'une fonction de commande de politique, l'URSP correspondant au dispositif terminal de détection, dans lequel l'URSP comprend une politique de sélection d'itinéraire de données correspondante selon laquelle le dispositif de détection envoie les données de mesure de détection à la SCF ;
recevoir, par la SCF, l'URSP envoyée par la fonction de commande de politique ; et
envoyer, par la SCF, l'URSP reçue au dispositif terminal de détection.

9. Procédé selon la revendication 1, dans lequel le procédé comprend en outre : envoyer, par la SCF au premier dispositif, au moins l'un des éléments suivants :
les données de mesure de détection ; et
un résultat d'analyse de service de détection obtenu par la SCF selon les données de mesure de détection.

10. Procédé de traitement d'un service de détection, le procédé comprenant :
recevoir (S402), par un dispositif de détection, des informations de commande de service de détection provenant d'une SCF, dans lequel les informations de commande de service de détection sont utilisées pour indiquer au dispositif de détection d'obtenir des données de mesure de détection ;
obtenir (S404), par le dispositif de détection, les données de mesure de détection selon les informations de commande de service de détection ; et
envoyer (S406), par le dispositif de détection, les données de mesure de détection à la SCF ;
dans lequel les informations de commande de service de détection sont envoyées par la SCF au dispositif de détection via une fonction de gestion d'accès et de mobilité ;
le dispositif de détection comprend au moins l'un des dispositifs suivants : un dispositif terminal de détection et un dispositif de réseau d'accès de détection ;
dans lequel le dispositif de détection est sélectionné par la SCF selon le message de demande de service de détection envoyé par le premier dispositif, ou
le dispositif de détection est sélectionné par la SCF selon un identifiant ou des informations d'adresse étant du dispositif de détection et étant obtenu(es) au niveau de la fonction de gestion d'accès et de mobilité.

11. Appareil (1100) destiné au traitement d'un service de détection, l'appareil comprenant :
un module de réception (1102), configuré pour recevoir un message de demande de service de détection envoyé par un premier dispositif ;
un module d'envoi (1104), configuré pour envoyer des informations de commande de service de détection à un dispositif de détection, dans lequel les informations de commande de service de détection sont générées par l'appareil selon le message de demande de service de détection, et les informations de commande de service de détection sont utilisées pour indiquer au dispositif de détection d'obtenir des données de mesure de détection ; et
le module de réception est en outre configuré pour recevoir les données de mesure de détection envoyées par le dispositif de détection ;
dans lequel le module d'envoi (1104) est configuré pour envoyer, par la SCF, via une fonction de gestion d'accès et de mobilité, les informations de commande de service de détection au dispositif de détection, dans lequel
le dispositif de détection comprend au moins l'un des dispositifs suivants : un dispositif terminal de détection et un dispositif de réseau d'accès de détection ;
dans lequel, avant l'envoi (S204), par la SCF, des informations de commande de service de détection au dispositif de détection, le module d'envoi (1104) est en outre configuré pour effectuer au moins l'une des opérations suivantes :
sélectionner, par la SCF, le dispositif de détection selon le message de demande de service de détection envoyé par le premier dispositif ; et
sélectionner, par la SCF, le dispositif de détection selon un identifiant ou des informations d'adresse étant du dispositif de détection et étant obtenu(es) au niveau de la fonction de gestion d'accès et de mobilité.

12. Appareil (1300) destiné au traitement d'un service de détection, l'appareil comprenant :
un module de réception (1302), configuré pour recevoir des informations de commande de service de détection provenant d'une SCF, dans lequel les informations de commande de service de détection sont utilisées pour indiquer à l'appareil d'obtenir des données de mesure de détection ;
un module de traitement (1304), configuré pour obtenir les données de mesure de détection selon les informations de commande de service de détection ; et
un module d'envoi (1306), configuré pour envoyer les données de mesure de détection à la SCF ;
dans lequel les informations de commande de service de détection sont envoyées par la SCF au dispositif de détection via une fonction de gestion d'accès et de mobilité ;
le dispositif de détection comprend au moins l'un des dispositifs suivants : un dispositif terminal de détection et un dispositif de réseau d'accès de détection ;
dans lequel le dispositif de détection est sélectionné par la SCF selon le message de demande de service de détection envoyé par le premier dispositif, ou
le dispositif de détection est sélectionné par la SCF selon un identifiant ou des informations d'adresse étant du dispositif de détection et étant obtenu(es) au niveau de la fonction de gestion d'accès et de mobilité.
